# EUROPEAN PATENT APPLICATION

(11) **EP 1 775 271 A2**
(43) Date of publication of application: **18.04.2007**
(21) Application number: 06122238.6
(22) Date of filing: 13.10.2006
(51) Int. Cl.: C04B 24/32, C04B 24/12, C04B 24/16, C04B 24/02

(54) **Cement additive**

(30) Priority: 14.10.2005 JP 2005299764
(71) Applicant: Nippon Shokubai Co.,Ltd., Osaka-shi, Osaka 541-0043 (JP)
(72) Inventor: Miyagawa, Minoru, Miura-shi, Kanagawa 238-0111 (JP); Ueta, Tomiyasu, Suita-shi, Osaka 564-0001 (JP)
(74) Representative: Hart Davis, Jason

(57) **Abstract**

To provide a cement admixture which makes it possible to: enhance slump maintaining capability; maintain fluidity; and provide a cement composition and the like having an appropriate viscosity for handling at the place where the composition and the like is handled.

A cement admixture comprising an alkylene oxide adduct comprising a compound having 3 or more active hydrogens and an oxyalkylene group added to the compound,
wherein an average molar number of addition of the oxyalkylene group relative to 1 mole of the active hydrogen is 100 mole or more.

## Description

### TECHNICAL FIELD

The present invention relates to a cement admixture. More specifically, the present invention relates to a cement admixture preferably used in a cement composition such as cement paste, mortar, and concrete.

### BACKGROUND ART

Cement admixtures havebeenwidelyusedas awater-reducing agent for cement compositions such as cement paste, mortar, and concrete, and have been essential for building civil engineering and building constructions using the cement compositions. Such cement admixtures enhance the fluidity of the cement composition and reduces water from the cement composition, and thereby exhibits a function of improving strength or durability and the like of a hardened product of the cement composition. Among such water-reducing agents, water-reducing agents containing a polycarboxylic acid polymer exhibit water-reducing performance higher than that of conventional naphthalene water-reducing agents, and therefore have been preferably used as a high performance AE water-reducing agent.

Such cement admixtures have been needed to have a function of providing a cement composition having an appropriate viscosity for handling at the place where the composition is handled, in addition to the water-reducing performance to the cement composition. That is, the cement admixtures used as the water-reducing agent exhibit the water-reducing performance by reducing the viscosity of the cement composition, and the cement admixtures which exhibit not only such a performance but also a function of providing a cement composition having an appropriate viscosity for handling at the place where the composition is handled have been desired in production places of civil engineering and building construction. If the cement admixtures exhibit such performances, the operation efficiency in building of civil engineering and building construction can be improved.

With respect to dispersants for inorganic powders, for example, Japanese Kokai Publication No. Hei-09-248438 (page 2) discloses a dispersant for inorganic powders containing, as an essential component, a water-soluble condensate or water-soluble polymer into which an oxypropylene group and/or a random polymerized chain of an oxybutylene group and an oxyethylene group is introduced.

Japanese Kokai Publication No.2000-109357 (page 2), for example, discloses that a polyoxyalkylene compound obtained by adding an alkylene oxide to a polyalkylene polyamine exhibits excellent dispersibility and cement dispersion assisting effect and also discloses that the cement composition with which a high performance AE water-reducing agent composed of a polycarboxylic acid having a polyalkylene glycol chain is mixed with the polyoxyalkylene compound exhibits excellent water-reducing effect.

However, such compounds having only water-reducing performance were not enough for use in the cement compositions and the like. That is, such water-reducing agents have room for further improvement in operation efficiency in construction places of civil engineering and building construction by (1) improving the capability of maintaining the fluidity of concrete at the production place, and (2) having a function of improving the state of the concrete and the like for easier handling.

### SUMMARY OF THE INVENTION

The present invention has been made in view of the above-mentioned state of the art. The present invention has an object to provide a cement admixture which makes it possible to: enhance slump maintaining capability; maintain fluidity; and provide a cement composition and the like having an appropriate viscosity for handling at the place where the composition and the like is handled.

The present inventors have made various investigations on cement admixtures capable of forming a cement composition and the like having maintained fluidity and excellent workability, among cement admixtures needed in construction places of civil engineering and building construction.

The inventors first noted that polycarboxylic acid polymers can exhibit water-reducing performance for the cement composition and the like. And they found that use of an alkylene oxide adduct containing a compound having 3 or more active hydrogens and an oxyalkylene group added to the compound together with a polycarboxylic acid polymer is effective for improvement in the viscosity of the cement composition and the like, because the steric hindrance of the adduct can delay adsorption of the polycarboxylic acid polymer to cement, and thereby the high dispersibility or the water-reducing performance of the polycarboxylic acid polymer can be maintained and also the fluidity can be maintainedwhile the slump maintaining capability is improved. The inventors also found that among such alkylene oxide adducts containing a compound having 3 or more active hydrogens and an oxyalkylene group added to the compound, an alkylene oxide adduct containing a compound having 3 or more active hydrogens and an oxyalkylene group added to the compound essentially containing 100 mole or more of the oxyalkylene groups can further increase the steric hindrance and also can control adsorption rate of the polycarboxylic acid polymer, and thereby the fluidity is maintained while the slump maintaining cap ability is improved, which can improve the viscosity of the cement composition and the like. Thereby, the present invention has been completed.

The present invention is a cement admixture comprising an alkylene oxide adduct comprising a compound having 3 or more active hydrogens and an oxyalkylene group added to the compound,
wherein an average molar number of addition of the oxyalkylene group relative to 1 mole of the active hydrogen is 100 mole or more.

The present invention includes a cement admixture comprising:
an alkylene oxide adduct comprising a compound having 3 or more active hydrogens and an oxyalkylene group added to the compound; and a sulfonic acid compound.

### DETAILED DESCRIPTION OF THE INVENTION

The present invention is described in more detail below. The above-mentioned alkylene oxide adduct containing a compound having 3 or more active hydrogens and an oxyalkylene group added to the compound is also referred to as alkylene oxide adduct (X) or adduct (X) below. The "(X)" in above-mentioned alkylene oxide adduct (X) or adduct (X) is just a symbol for distinction between the adduct (X) and the subordinate concept such as a polyalkyleneimine alkylene oxide adduct (A), polyalcohol alkylene oxide adduct (A'), anda thioalcohol alkylene oxide adduct (A"). In the present description, the terms "alkylene oxide adduct" and "adduct" mean the above-mentioned alkylene oxide adduct (X) and the above-mentioned adduct (X), respectively, unless otherwise specified.

The above-mentioned compound having 3 or more active hydrogens is a compound having 3 or more active hydrogen groups in the molecule. Preferred examples of the above-mentioned compound having 3 or more active hydrogen groups in the molecule include polyalcohols having 3 or more hydrogen atoms derived from hydroxyl groups (-OH), amine compounds having 3 or more hydrogen atoms derived from amino groups or secondary amine groups, and thioalcohol compounds having 3 or more hydrogen atoms derived from thiol groups (-SH). One or two or more species of them may be used.

The preferable embodiments of the present invention include an embodiment in which the alkylene oxide adduct is obtained by adding an alkylene oxide to polyalcohol and/or polyethyleneimine.

The above-mentioned average molar number of addition of the oxyalkylene group relative to 1 mole of the active hydrogen means an average value of the molar number of the oxyalkylene group added to 1 mole of an active hydrogen group contained in the above-mentioned compound containing 3 or more active hydrogens forming the adduct (X) . For example, such an average molar number of addition of the oxyalkylene group can be calculated from the following formula.

Average molar number of addition of the oxyalkylene group relative to 1 mole of the active hydrogen = "total molar number of the oxyalkylene group added to the active hydrogen groups contained in the adduct (X) "/"total molar number of the active hydrogen group contained in the above-mentioned compound having 3 or more active hydrogens"

The preferable embodiments of the present invention include an embodiment in which the cement admixture further comprising a polycarboxylic acid polymer.

The details of the above-mentioned embodiment and the technical meanings and the like are described below in description regarding the polyalkyleneimine alkylene oxide adduct (A) as the subordinate concept of the above-mentioned adduct (X). The details of the above-mentioned embodiment in which the polycarboxylic acid polymer is used and the technical meanings and the like are applied, as they are, to not only the polyalkyleneimine alkylene oxide adduct (A) but also the above-mentioned adduct (X) as the generic concept.

The preferable embodiments of the present invention include an embodiment in which the polycarboxylic acid polymer comprises:
a monomer unit derived from a polyalkylene glycol unsaturated monomer represented by the following formula (1): 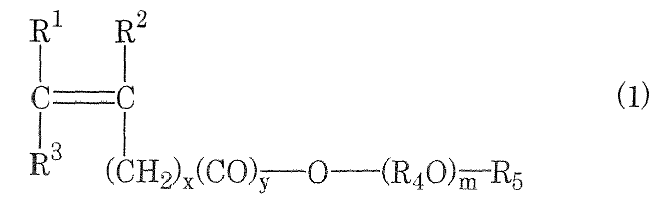
in the above formula (1),
R¹, R², and R³ being the same or different and each representing a hydrogen atom or a methyl group;
representing one or two or more species of oxyalkylene groups containing 2 to 4 carbon atoms;
R⁵ representing a hydrogen atom or a hydrocarbon group containing 1 to 30 carbon atoms;
x representing 0 to 2;
y representing 0 to 1; and
m representing an average molar number of addition of the oxyalkylene group and being 2 to 300; and
a monomer unit derived from an unsaturated monocarboxylic acid monomer represented by the following formula (2): 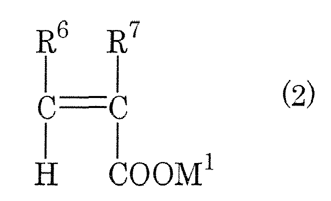
in the above formula (2),
R⁶ and R⁷ being the same or different and each representing a hydrogen atom or a methyl group;

M¹ representing a hydrogen atom, a metal atom, an ammonium group, or an organic amine group.

Examples of the metal atom in M¹ of the above formula (2) include monovalent metal atoms such as alkali metal atoms such as lithium, sodium, and potassium; divalent metal atoms such as alkaline earth metal atoms such as calcium and magnesium; and trivalent metal atoms such as aluminum and iron.

Alkanol amine groups such as ethanol amine group, diethanol amine group, and triethanol amine group, and triethyl amine group are preferable as the organic amine group. Further, M¹ may be an ammonium group.

Preferred Examples of such unsaturated monocarboxylic acid monomer include acrylic acid, methacrylic acid, crotonic acid; and monovalent metal salts thereof, divalent metal salts thereof, ammonium salts thereof, and organic amine salts thereof. Among them, methacrylic acid; and monovalent metal salts thereof, divalent metal salts thereof, ammonium salts thereof, and organic amine salts thereof are preferably used as the unsaturated carboxylic acid monomer (b) in terms of improvement in cement dispersibility.

The above-mentioned polycarboxylic acid polymer is also referred to as "polycarboxylic acid polymer (B) ". The "(B)" in above-mentioned polycarboxylic acid polymer (B) is just a symbol. The use embodiment of the above-mentioned polycarboxylic acid polymer (B) and the technical meanings and the like are described below in description regarding the polyalkyleneimine alkylene oxide adduct (A), and can be applied, as they are, to the above-mentioned adduct (X) as the generic concept.

The preferable embodiments of the present invention include an embodiment in which the unsaturated monocarboxylic acid monomer accounts for 50% or more by weight relative to 100% by weight of total carboxylic acid monomer components. The above-mentioned unsaturatedmonocarboxylic acidmonomer has one carboxyl group in one molecule. In contrast, a polycarboxylic acid monomer such as maleic acid has two or more carboxyl group in one molecule. Therefore, if such a polycarboxylic acid monomer is used for synthesizing a polymer, the amount of the carboxyl group in the polymer increases, and therefore a group adsorbed to cement particles increases.

The copolymer constituting the cement admixture of the present invention exhibits the function by controlling the adsorption rate to cement particles. Therefore, if the carboxyl group as an adsorption group increases too much, the dispersibility increases. Thereby, the exhibition of the slump maintaining capability, which is a characteristic of the present invention, may be insufficiently exhibited. The polycarboxylic acid monomer such as maleic acid hardly has homopolymerizability, and there fore depends on the polymerizability of the polyalkylene glycol monomer in order to improve the polymerization degree. Therefore, the amount of the polycarboxylic acid monomer used in synthesis of the polymer is difficult to freely vary. Accordingly, it is preferable to control the amount of the polycarboxylic acid monomer. If the amount of the polycarboxylic acid monomer becomes smaller in order to lower the dispersibility, residual polyalkylene glycol monomers increase and pure contents of the polymer is not increases, which causes a problem of extremely increasing the use amount of the polymer. Therefore, it is preferable to make the use amount of the polycarboxylic acid monomer having two or more adsorption groups as small as possible. Therefore, more excellent effects are exhibited if the unsaturated moncarboxylic acid monomer is mainly used in the preparation of the above-mentioned polycarboxylic acid polymer, that is, the above-mentioned unsaturated monocarboxylic acid monomer accounts for 50% or more relative to 100% by weight of the total carboxylic acid monomer components. The above-mentioned unsaturated monocarboxylic acid monomer preferably accounts for 70% by weight or more relative to 100% by weight of total carboxylic acid monomer components, and more preferably 80% by weight or more, and still more preferably 90% by weight or more, and particularly preferably 95% by weight or more. Most preferably, the unsaturated monocarboxylic acid monomer account for substantially 100% by weight.

The present invention include a cement admixture comprising: an alkylene oxide adduct comprising a compound having 3 or more active hydrogens and an oxyalkylene group added to the compound; and a sulfonic acid compound.

Hereinafter, the above-mentioned sulfonic acid compound is referred to as sulfonic acid compound (C). The "(C)" in the above-mentioned sulfonic acid compound (C) is just a symbol. The use embodiment of the above-mentioned sulfonic acid compound (C) and the technical meanings and the like are mentioned below in description regarding the polyalkyleneimine alkylene oxide adduct (A), and can be applied, as they are, to the above-mentioned adduct (X) as the generic concept.

The preferable embodiments of the present invention include an embodiment in which the compound having 3 or more active hydrogens comprises an active hydrogen-containing hydroxyl group and/or an active hydrogen-containing amino group.

In the above-mentioned embodiment, the oxyalkylene group can be more preferably added to the above-mentioned compound having 3 or more active hydrogens.

The preferable embodiments of the present invention include an embodiment in which the adduct comprises an oxyalkylene group containing 3 or more carbon atoms.

The alkylene oxide adduct having the above-mentioned embodiment contains an oxyalkyelene group containing 3 or more carbon atoms with high hydrophobicity. Due to this structure, such an adduct is excellent in water-reducing performance and low viscosity.

The preferable embodiments of the present invention include an embodiment in which the alkylene oxide adduct comprises oxyalkylene groups derived from ethylene oxide and propylene oxide.

The above-mentioned alkylene oxide adduct preferably has an oxyalkylene chain formed from two or more species of oxyalkylene groups. Among alkylene oxide adducts having an oxyalkylene chain formed from two or more species of oxyalkylene groups, the alkylene oxide adduct having the above-mentioned embodiment is more preferable.

The above-mentioned oxyalkylene chain formed from two or more species of oxyalkylene groups preferably has a so-called P-Q-P type block copolymerization structure. More preferred is an embodiment in which P is an oxyethylene group and Q is an oxyalkylene group containing 3 or more carbon atoms in such a structure. In such a P-Q-P type structure, the oxyalkylene group containing 3 or more carbon atoms having high hydrophobicity (part represented by Q) exists inside the oxyethylene chain having high hydrophilicity (part represented by P). Due to this structure, the adduct can be excellent in water-reducing performance and low viscosity. Still more preferred is an embodiment in which P is an oxyethylene group and Q is an oxypropylene group, in the above-mentioned structure. Thereby, the adduct can more sufficiently exhibit both functional effects of the water-reducing performance and the low viscosity. Particularly preferred is an embodiment in which the above-mentioned adduct (X) has such a structure and the terminal of the adduct (X) is an oxyethylene group. Each of the above-mentioned P and Q is just a symbol.

The weight average molecular weight of the above-mentioned adduct (X) is not especially limited and preferably 500 to 500000. The lower limit of the above-mentioned weight average molecular weight is more preferably 1000 or more, and still more preferably 5000 or more, and particularly preferably 8000 or more, and most preferably 10000 or more. The upper limit of the above-mentioned average weight molecular weight is more preferably 400000 or less, and still more preferably 300000 or less, and particularly preferably 200000 or less, and most preferably 150000 or less. In measurement of the above-mentioned weight average molecular weight of the adduct (X), values measured by GPC under the following measurement condition are adopted as the value of the weight average molecular weight of the above-mentioned adduct (X). In measurement of the above-mentioned weight average molecular weight of the adduct (X), values measured under the following measurement condition are adopted.

### Analysis conditions

Column used: TSKguardcolumn α+TSKgel; product of TOSOH Corp. Each of α-5000+TSKgel α-4000+TSKgel and α-3000 is connected. Eluent used: A solution prepared by mixing acetonitrile 2000 g with a solution in which sodium dihydrogenphosphate 2H₂O 62.4 g and disodium hydrogenphosphate 12H₂O 143.3 g are dissolved in ion exchange water 7794.3 g.
Detector: product of Viscotek Corp., Triple detector, Model 302 Light scattering detector :
Right-angled light scattering: diffusion angle at 90°
Low angle light scattering: diffusion angle at 7°
Cell capacity: 18 µL
Wavelength: 670 nm
RI detector : Cell capacity: 12 µL, Wavelength: 660nm
Standard sample: a device constant is determined using polyethylene glycol SE-8 (Mw107000) product of TOSOH Corp.; the dn/dC is defined as 0.135 mL/g; the refractive index of used eluent is defined as 1.333.

### Injected amount

Standard sample: A solution diluted with the above-mentioned eluent 100 µL is charged such that the polymer concentration is 0.2 vol%.
Sample: A solution diluted with the above-mentioned eluent 100 µL is charged such that the polymer concentration is 1.0 vol%. Flow rate: 0.8 ml/min
Column temperature: 40°C The preferable embodiments of the present invention include an embodiment in which the above-mentioned cement admixture is a cement admixture comprising the polyalkyleneimine alkylene oxide adduct (A), wherein an average molar number of addition of the oxyalkylene group, as a constitutional unit of the polyalkyleneimine alkylene oxide adduct (A), to active hydrogen derived from an amine is 100 mole or more.

The above-mentioned polyalkyleneimine alkylene oxide adduct (hereinafter, also referred to as polyalkyleneimine alkylene oxide adduct (A) or simply as adduct (A) ) is mentioned below. The details of embodiments of the adduct (A) and the technical meanings and the like, which are mentioned below, can be appropriately applied to the adduct (X) as the generic concept of the adduct (A).

The above-mentioned cement admixture has at least one embodiment among the following (1) to (4) embodiments:
(1) an embodiment in which the cement admixture contains the polyalkyleneimine alkylene oxide (A) in which an average molar number of addition of the oxyalkylene group is 100 mole or more;
(2) an embodiment in which the cement admixture contains the polyalkyleneimine alkylene oxide (A) in which an average molar number of addition of the oxyalkylene group is 100 mole or more, and the polycarboxylic acid polymer (B);
(3) an embodiment in which the cement admixture contains the polyalkyleneimine alkylene oxide (A) in which an average molar number of addition of the oxyalkylene group is 100 mole or more, and the sulfonic acid compound (C); and
(4) an embodiment in which the cement admixture contains: the polyalkyleneimine alkylene oxide (A) in which an average molar number of addition of the oxyalkylene group is 100 mole or more; the polycarboxylic acid polymer (B); and the sulfonic acid compound (C).

In these embodiments, one or two or more species may be used as each of the polyalkyleneimine alkylene oxide (A) in which an average molar number of addition of an oxyalkylene group is 100 mole or more, the polycarboxylic acid polymer (B), and the sulfonic acid compound (C). The two or more species of the polyalkyleneimine alkylene oxide adducts (A) mean, for example, that polyalkyleneimine alkylene oxide adducts (A) having different average molar numbers of addition of the oxyalkylene group or different contents of the oxyalkylene group containing 3 or more carbon atoms are used. The two or more species of the polycarboxylic acidpolymers (B) mean that the polycarboxylic acid polymers (B) having different properties such as average molecular weight and average molar number of addition of the alkylene oxide are used.

Hereinafter, these constitutional elements in the present invention are also referred to as follows: polyalkyleneimine alkylene oxide adduct (A) (also referred to as simply adduct (A)); polyalkyleneimine ethylene oxide adduct essentially containing an oxyalkylene group containing 3 or more carbon atoms (A1) (also referred to as simply adduct (A1));polyalkyleneimine alkylene oxide adduct in which an average molar number of addition of an oxyalkylene group is 100 mole or more (A2) (also referred to as simply adduct (A2)); polyalkyleneimine alkylene oxide adduct in which an average molar number of addition of an oxyalkylene group is 100 mole or more and an oxyalkylene group containing 3 or more carbon atoms is essentially contained (A3) (also referred to as simply adduct (A3)); polycarboxylic acid polymer (B) (also referred to as simply polymer (B)); polycarboxylic acid polymer prepared by copolymerizing a polyalkyleneimine alkylene oxide adduct monomer (B1) (also referred to as simply polymer (B1) ) ; polycarboxylic acid polymer having a polyalkylene glycol side chain essentially containing an oxyalkylene group containing 3 or more carbon atoms (B2) (also referred to as simply polymer (B2)); and polycarboxylic acid polymer (B3) except for the above-mentioned polymers (B1) and (B2) (also referred to as simply polymer (B3)).

The polyalkyleneimine alkylene oxide adduct monomer means a polyalkyleneimine alkylene oxide adduct having a polymerizable unsaturated double bond.

In the above-mentioned constitutional elements, the adduct (A) is an adduct as the generic concept of the adducts (A1), (A2), and (A3). The adducts (A1), (A2), and (A3) are included in the adduct (A) . Similarly, the polymer (B) includes the polymers (B1), (B-2), and (B3).

In the present invention, the cement admixture of the above-mentioned embodiment (1) has an embodiment of containing the polyalkyleneimine alkylene oxide adduct (A) in which an average molar number of addition of the oxyalkylene group is 100 mole or more, that is, containing the adduct (A2).

In addition to the embodiment in which only the adduct (A2) is used, the following embodiments may be mentioned, for example.
Combination of the adduct (A2) and the adduct (A),
combination of the adduct (A3) and the adduct (A),
combination of the adduct (A2) and the adduct (A1),
combination of the adduct (A3) and the adduct (A1),
combination of the adduct (A2), the adduct (A3), and the adduct (A), and
combination of the adduct (A2), the adduct (A3), and the adduct (A1).

These combinations are preferable embodiments of the present invention. More preferred is an embodiment in which the adduct (A2) or the adduct (A3) is singly used, and still more preferred is an embodiment in which the adduct (A3) is singly used.

The cement admixture of the above-mentioned embodiment (2) has an embodiment of containing the adduct (A2) and the polycarboxylic acid polymer (B). For example, the following combinations may be mentioned.

Combination of the adduct (A3) and the polymer (B1),
combination of the adduct (A3) and the polymer (B2),
combination of the adduct (A3) and the polymer (B3), combination of the adduct (A3), the polymer (B1), and the polymer (B3), and
combination of the adduct (A3), the polymer (B2), and the polymer (B3) .

The cement admixtures of the above-mentioned embodiments (3) and (4) are cement admixtures further containing the sulfonic acid compound in addition to the embodiments (1) and (2), respectively. The above-mentioned combinations in the above-mentioned embodiments (1) and (2) may be also applied, as they are, to the embodiments (4) and (5), respectively.

It is preferable that the cement admixture of the above-mentioned embodiment (1) contains 30% by weight or more of the adduct (A2) relative to 100% by weight of solids of the cement admixture. If the proportion of the adduct (A2) is less than 30% by weight, the dispersibility or the water-reducing performance is remarkably reduced, and therefore desired fluidity is not obtained. The proportion of the adduct (A2) is more preferably 50% by weight or more, and still more preferably 70%by weight or more, and particularly preferably 80%by weight or more.

It is preferable that the cement admixture of the above-mentioned embodiment (2) contains 5% by weight or more of the adduct (A2) relative to 100% by weight of solids of the cement admixture. If the proportion of the adduct (A2) is less than 5% by weight, the admixture may not have excellent slump maintaining capability. The proportion of the adduct (A2) is more preferably 10% by weight or more, and still more preferably 20%by weight or more, and particularly preferably 30% by weight or more. The use ratio of the adduct (A2) to the polycarboxylic acid polymer (B) is preferably 5/95 to 95/5% by weight. The use ratio is more preferably 10/90 to 90/10% by weight, and still more preferably 20/80 to 80/20% by weight, and particularly preferably 30/70 to 70/30% by weight.

It is preferable that the cement admixture of the above-mentioned embodiment (3) contains 10% by weight or more of the adduct (A2) relative to 100% by weight of solids of the cement admixture. If the proportion of the adduct (A2) is less than 10% by weight, the admixture may not have excellent slump maintaining capability. The proportion is more preferably 20% by weight or more, and still more preferably 30% by weight or more, and particularly preferably 40% by weight or more. It is also preferable that the cement admixture of the above-mentioned embodiment (3) contains 5% by weight or more of the sulfonic acid compound (C) relative to 100% by weight of solids of the cement admixture. The proportion is more preferably 10% by weight or more, and still more preferably 20% by weight or more, and particularly preferably 30% by weight or more. The use ratio of the adduct (A2) to the sulfonic acid compound (C) is 5/95 to 95/5% by weight. The use ratio is more preferably 10/90 to 90/10% by weight, and still more preferably 20/80 to 80/20% by weight, and particularly preferably 30/70 to 70/30% by weight.

It is preferable that the cement admixture of the above-mentioned embodiment (4) contains 5% by weight or more of the adduct (A2) relative to 100% by weight of solids of the cement admixture. If the proportion is less than 5% by weight, the admixture may not excellent slump maintaining capability. The proportion is more preferably 10% by weight or more, and still more preferably 15% by weight or more, and particularly preferably 20% by weight or more. It is also preferable that the cement admixture of the above-mentioned embodiment (4) contains 5% by weight or more of the polycarboxylic acid polymer (B) relative to 100% by weight of solids of the cement admixture. If the proportion is less than 5% by weight, the dispersibility or the water-reducing performance is remarkably reduced, and desired fluidity is not obtained. The proportion is more preferably 10% by weight or more, and still more preferably 15% by weight or more, and particularly preferably 20% by weight or more. Further, it is preferable that the cement admixture of the above-mentioned embodiment (4) contains 5% by weight or more of the sulfonic acid compound (C) relative to 100% by weight of solids of the cement admixture. The proportion is preferably 10% by weight or more, and still more preferably 20% by weight or more, and particularly preferably 30% by weight or more.

It is preferable that the cement admixtures of the above-mentioned embodiments (1) to (4) essentially contains the polyalkyleneimine alkylene oxide adduct in which an averagemolar number of addition of the oxyalkylene group is 100 mole or more (the adduct (A2)) as the adduct (A). If the average molar number is less than 100 mole, the absolute molecular weight becomes smaller, and therefore sufficient steric hindrance can not be provided. Therefore, such an admixture may have insufficient slump maintaining capability.

It is preferable that the cement admixtures of the above-mentioned embodiments (1) to (4) essentially contains the adduct essentially containing an oxyalkylene group containing 3 or more carbon atoms (the adduct (R1 or (A3)) as the adduct (A). If the adduct contains the oxyalkylene group containing 3 or more carbon atoms, the softening point of the polyalkyleneimine alkylene oxide adduct (A) can be lowered. Thereby, the fluidity of the cement composition can be enhanced and effects on the slump maintaining capability can be expected. The proportion of such an oxyalkylene group containing 3 or more carbon atoms is preferably 1% by weight or more relative to 100% by weight of the total amount of the oxyalkylene groups contained in the polyalkyleneimine alkylene oxide adduct (A). The proportion is more preferably 5% by weight or more, and still more preferably 10% by weight or more, and particularly preferably 15% by weight or more, and most preferably 20% by weight or more. Further, the proportion of the oxyalkylene group containing 3 or more carbon atoms is preferably 90% by weight or less. If the proportion is more than 90% by weight, the hydrophobicity becomes too high, and therefore the admixture is hardly dissolved in water, failing to exhibit sufficient dispersibility. The proportion is more preferably 80% by weight or less, and particularly preferably 70% by weight or less, and most preferably 60% by weight or less.

The oxyalkylene group containing 3 or more carbon atoms in the above-mentioned adduct (A) is preferably an oxypropylene group. The preferable embodiments of the cement admixture of the present invention include an embodiment in which the oxyalkylene group containing 3 or more carbon atoms is an oxypropylene group.

It is also preferable that the above-mentioned adduct (A) essentially contains an oxyethylene group. Thereby, the cement admixture has more improved hydrophilicity and therefore exhibits the dispersibility more sufficiently. Morepreferably, the adduct (A) essentially contains both of an oxypropylene group and an oxyethylene group. Still more preferably, the adduct (A) has a block polymerization structure of an oxypropylene group and an oxyethylene group, so-called P-Q-P type block polymerization structure (P:oxyethylene group, Q:oxypropylene group), as mentioned below.

In the present invention, the following method is preferable as the measurement method of the solids of the cement admixture.

### (Solids measurement method)

1. An aluminum plate is precisely weighed.
2. A substance to be measured for solids is precisely weighed on the aluminum plate precisely weighed in 1.
3. The substance precisely weighed in 2 was put in a dryer adjusted at 130°C under nitrogen atmosphere for 1 hour.
4. One hour later, the substance is taken out from the dryer and cooled for 15 minutes in a desiccator at a room temperature.
5. 15 minutes later, the substance is taken out from the desiccator, and the aluminum plate and the substance are precisely weighed.
6. The weight of the aluminum plate measured in 1 is subtracted from the weight measured in 5 and then the calculated value is divided by the weight of the solids measured in 2. Thereby, the solids are measured.

The following method is preferred as the measurement method of solids proportion of the above-mentioned adduct (A) to solids of the cement admixture and the measurement method of solids proportion of the above-mentioned polymer (B) to solids of the cement admixture.
1. A cement admixture aqueous solution adjusted to 20% by weight of solids is adjusted to pH 2.0 by adding a 20% by weight aqueous solution of paratoluenesulfonic acid thereinto.
2. The mixture prepared in 1 is adjusted at 85°C and kept standing for 1 hour.
3. Identify that the mixture is divided into two phases, and separate the mixture into supernatant and precipitation.
4. The supernatant is concentrated and the paratoluene sulfonic acid amount is quantitated by liquid chromatography. The paratoluenesulfonic acid amount is subtracted from a weight of the supernatant to calculate a weight of the adduct (A). The obtained weight of the adduct (A) is divided by the weight of the cement admixture used in 1 to calculate a solids proportion of the adduct (A).
5. An equivalent amount of water is added to the precipitation obtained in 3 and the mixture is adjusted at 85°C and kept standing for 1 hour.
6. Identify that the mixture is divided into two phases, and separate the mixture into supernatant and precipitation.
7. The supernatant is concentrated and the paratoluene sulfonic acid amount is quantitated by liquid chromatography. The paratoluenesulfonic acid amount is subtracted from a weight of the supernatant to calculate a weight of the polymer (B). The obtained weight of the polymer (B) is divided by the weight of the cement admixture used in 1 to calculate a solids proportion of the polymer (B) . With respect to the production method of the cement admixture of the present invention, the cement admixture containing the adduct (A2) and the polycarboxylic acid polymer (B) is produced in the cement admixture of the above-mentioned embodiment (2); the cement admixture containing the adduct (A2) and the sulfonic acid compound (C) is produced in the cement admixture of the above-mentioned embodiment (3) ; and the cement admixture containing the adduct (A2), the polycarboxylic acid polymer (B), and the sulfonic acid compound (C) is produced in the cement admixture of the above-mentioned embodiment (4). These production methods are not especially limited. It is preferable that the cement admixture is produced by preparing the above-mentioned adduct (A), polycarboxylic acid polymer (B), and sulfonic acid compound (C) separately, and then mixing these components (A) to (C). The polymerization method and the like is as mentioned below.

Hereinafter, the polyalkyleneimine alkylene oxide adducts (A) and (A1) to (A3), the polycarboxylic acid polymers (B) and (B1) to (B3), and the sulfonic acid compound (C) are mentioned below in more detail. The above-mentioned polyalkyleneimine alkylene oxide adduct (A) may or may not have a polymerizable unsaturated double bond. The polyalkyleneimine alkylene oxide adduct (A) containing a polymerizable unsaturated double bond and the adduct (A) not containing a polymerizable unsaturated double bond may be used in combination as the adduct (A) . Compounds prepared by adding an alkylene oxide to a nitrogen atom of an amino group or an imino group of the polyalkyleneimine are preferred as the above-mentioned adduct (A) not containing a polymerizable unsaturated double bond. The nitrogen atom of an amino group and an imino group to which an alkylene oxide is added has an active hydrogen atom.

As the above-mentioned polyalkyleneimine, preferred are homopolymers or copolymers prepared by polymerizing, by a usual polymerization method, one or two or more alkylene imines containing 2 to 8 carbon atoms such as ethyleneimine, propyleneimine, 1,2-butyleneimine, 2,3-butyleneimine, and 1,1-dimethyl ethyleneimine. These may be used singly or in combination of two or more species of them. Such polyalkyleneimine forms a polyalkyleneimine chain of the adduct (A). The polyalkyleneimine chain has any of straight chain structure, branched chain structure, and three-dimensional crosslinked structure. Further, the above-mentioned polyalkyleneimine may be ethylenediamine, diethylenetriamine, triethylenetetramine, tetraethylenepentamine, or the like. Such polyalkyleneimine generally has, in the structure, a primary amino group or a secondary amino (imino) group having an active hydrogen atom, in addition to a tertiary amino group.

Intheabove-mentionedadduct (A), theaveragemolarnumber of addition of the oxyalkylene group is 100 mole or more, like the adduct (A2) or (A3). It is particularly preferable that the adduct (A) contains at least one species of oxyalkylene group containing 3 or more carbon atoms, as in the adduct (A1) or (A3). If one adduct contains two or more species of oxyalkylene groups, the oxyalkylene groups may be added randomly, alternatively, or in block. It is more preferable that the oxyalkylene groups are added in block. As the structure of the above-mentioned adduct (A1) or (A3) essentially containing such an oxyalkylene group, at least one species of the oxyalkylene group containing 3 or more carbon atoms is contained in the adduct (A1) or (A3), and structures formed from one or two or more species of the following compounds are preferred. Alkylene oxides containing 2 to 8 carbon atoms such as ethylene oxide, propylene oxide, butylene oxide, isobutylene oxide, 1-butene oxide, 2-butene oxide, trimethylethylene oxide, tetramethylene oxide, tetramethylethylene oxide, butadiene monoxide, and octylene oxide; aliphatic epoxides such as dipentaneethylene oxide and dihexaneethylene oxide; alicyclic epoxides such as trimethylene oxide, tetramethylene oxide, tetrahydrofuran, tetrahydropyran, and octylene oxide; and aromatic epoxides such as styrene oxide, and 1,1-diphenyl ethylene oxide. Adducts containing an ethylene oxide and a propylene oxide or adducts containing an ethylene oxide and a butylene oxide are in a preferable combination because the balance among the water-reducing performance, the slump maintaining capability, and the air content-reducing effect is good in the cases where such an adduct is used as a cement admixture.

With respect to the above-mentioned oxyalkylene group, the preferable embodiment of the above-mentioned adduct (A1) or (A3) is an embodiment in which the adduct (A1) or (A3) contains two or more species of the oxyalkylene groups and the oxyalkylene groups are added in block. That is, it is preferable that the above-mentioned adduct (A1) or (A3) has an oxyalkylene chain formed from two or more species of the oxyalkylene groups, and the oxyalkylene chain has a so-called P-Q-P type block copolymerization structure. More preferred is an embodiment in which P is an oxyethylene group and Q is an oxyalkylene group containing 3 or more carbon atoms in such a structure. In such an P-Q-P type structure, the oxyalkylene group containing 3 or more carbon atoms having high hydrophobicity (part represented by Q) exists inside the oxyethylene chain having high hydrophilicity (part represented by P). Due to this structure, the adduct can be excellent in water-reducing performance and low viscosity. Still more preferred is an embodiment in which P is an oxyethylene group and Q is an oxypropylene group, in the above-mentioned structure. Thereby, the adduct can more sufficiently exhibit both functional effects of the water-reducing performance and the low viscosity. Particularly preferred is an embodiment in which the above-mentioned adduct (A1) or (A3) has such a structure and the terminal of the (A1) or (A3) is an oxyethylene group. Such an embodiment is particularly preferable embodiment of the adduct (A1) or (A3).

The above-mentioned adduct (A) has a polyalkyleneimine chain. It is preferable that the polyalkyleneimine chain is formed from ethyleneimine as a main component. In this case, "as a main component" means that ethyleneimine occupies a large majority of the molar number of the total alkyleneimine if two or more species of alkyleneimines form the polalkyleneimine chain. In the present invention, ethyleneimine occupies a majority of the alkyleneimine forming the polyethyleneimine chain. Therefore, the hydrophilicity of the adduct (A) is improved and thereby the functional effects are sufficiently exhibited. Therefore, the above-mentioned "ethyleneimine occupies a majority of the alkyleneimine forming the polyethyleneimine chain" is satisfied by using ethyleneimine as the alkyleneimine forming the polyalkyleneimine chain so that the above-mentioned functional effects can be sufficiently exhibited. Therefore, the polyalkyleneimine can be "formed from ethyleneimine as a main component."

In the above-mentioned alkyleneimine forming the polyalkyleneimine chain, the ethyleneimine is 50 to 100% by mole relative to 100% by mole of the total alkyleneimine, if the ethyleneimine "as a main component" is represented by a value " % by mole" relative to 100% by mole of the total alkyleneimine. If the ethyleneimine is less than 50% by mole, the hydrophilicity of the polyalkyleneimine chain may decrease. The proportion of the ethyleneimine is more preferably 60% by mole or more, and still more preferably 70% by mole or more, and particularly preferably 80% by mole or more, and most preferably 90% by mole or more. In the above-mentioned adduct (A), the average polymerization number of the alkyleneimine in one polyalkyleneimine chain is preferably 2 or more, and 300 or less. If the average polymerization number is less than 2, the function of the adduct (A) may be insufficiently exhibi ted. If the average polymerization number is more than 300, the polymerizability of the adduct (A) may decrease. The average polymerization number is particularly preferably 3 or more. Further, the average polymerization number is more particularly 200 or less, and still more preferably 100 or less, and particularly preferably 75 or less, and most preferably 50 or less. The average polymerization number of the diethylenetriamine is 2, and the average polymerization number of the triethylenetetramine is 3.

In the above-mentioned adduct (A), the average molar number of addition of the oxyalkylene group is more than 0 and 500 or less. If the average molar number of addition of the oxyalkylene group is more than 500, the polymerizability of these monomers may be reduced. The average molar number of addition of the oxyalkylene group is more preferably 450 or less, and still more preferably 400 or less, and particularly preferably 350 or less, and most preferably 300 or less. Further, the average molar number of addition of the oxyalkylene group is more preferably 50 or more, and still more preferably 70 or more, and particularly preferably 90 or more, and most preferably 100 or more. If the average molar number of addition of the oxyalkylene group in the above-mentioned adduct (A) is out of such ranges, the functional effect of improving the fluidity of the cement composition and the like may be insufficiently exhibited. The above-mentioned average molar number of addition means an average value of the molar number of the oxyalkylene group added to 1 mole of the active hydrogen group contained in the polyalkyleneimine forming the adduct (A) . If two ormore species of the above-mentioned adducts (A) are used, the average molar number of addition of the oxyalkylene group is 100 mole or more in at least one species of the adducts (A), and the average molar number of addition of the oxyalkylene group may be 100 mole or less and out of the above-mentioned ranges in one or two or more species of the adducts (A). With respect to the average molar number of addition of the oxyalkylene group in this case, if the above-mentioned adduct (A) in which the average molar number of addition of the oxyalkylene group is 200 mole and the above-mentioned adduct (A) in which the average molar number of addition of the oxyalkylene group is 50 mole are used at 50/50% by mole, the average molar number of addition of the oxyalkylene group is 125 mole, and similarly if the adducts (A) are used at 20/80% by weight, the average molar number of addition of the oxyalkylene group is 80 mole.

The weight average molecular weight of the above-mentioned adduct (A) is preferably 5000 or more and 1000000 or less. The weight average molecular weight of the above-mentioned adduct (A) is more preferably 10000 or more, and still more preferably 15000 or more, and particularly preferably 20000 or more. Further, the weight average molecular weight of the above-mentioned adduct (A) is more preferably 700000 or less, and still more preferably 500000 or less, and particularly preferably 300000 or less. If two or more species of the above-mentioned adducts (A) are used, the weight average molecular weight of the adducts (A) in which all of the adducts (A) is mixed satisfies the above-mentioned ranges. One or two or more species of the adducts (A) maybe out of the above-mentioned ranges.

The particularly preferable embodiment of the above-mentioned adduct (A) is an embodiment in which the adduct (A) has a P-Q-P type (P: oxyethylene group, Q: oxypropylene group) block copolymerization structure, and the terminal of the adduct (A) is an oxyethylene group, as mentioned above. The adduct (A) in this embodiment is preferably prepared by firstly adding ethylene oxide to polyethyleneimine and then adding propylene oxide and ethylene oxide thereto in this order.

In the adduct (A) in such an embodiment, the average polymerization number of the alkyleneimine in one polyethyleneimine chain to be used and the average molar number of addition of the ethylene oxide or the propylene oxide are as mentioned above. Particularly preferable embodiment is an embodiment in which the average polymerization number of the alkyleneimine in one polyethyleneimine chain to be used is 5 to 50, and the molar number of addition of the ethylene oxide added to the polyethyleneimine is 3 to 300, and the molar number of addition of the propylene oxide added to the ethylene oxide is 3 to 200, and the molar number of addition of the ethylene oxide at the terminal is 3 to 300. Most preferable embodiment is an embodiment in which the average polymerization number of the alkyleneimine in one polyethyleneimine chain to be used is 10 to 45, and the molar number of addition of the ethylene oxide added to the polyethyleneimine is 3 to 200, and the molar number of addition of the propylene oxide added to the ethylene oxide is 3 to 100, and the molar number of addition of the ethylene oxide at the terminal is 3 to 200.

The above-mentioned adduct (A1) is not especially limited as long as it is the above-mentioned adduct (A) essentially containing an oxyalkylene group containing 3 or more carbon atoms. The above-mentioned adduct (A2) is not especially limited as long as it is the above-mentioned adduct (A) in which the average molar number of addition of the oxyalkylene group is 100 mole or more. The above-mentioned adduct (A3) is not especially limited as long as it is the above-mentioned adduct (A) essentially containing an oxyalkylene group containing 3 or more carbon atoms, and the average molar number of addition of the oxyalkylene group is 100 mole or more.

The above-mentioned polycarboxylic acid polymer (B) is preferably prepared by copolymerizing a monomer component essentially containing a polyalkylene glycol unsaturated monomer (a) and an unsaturated monocarboxylic acid monomer (b). The above-mentioned polycarboxylic acid polymer (B) is more preferably prepared by copolymerizing a monomer component containing 1 to 99% by weight of the polyalkylene glycol unsaturated monomer (a) and 99 to 1% by weight of the unsaturated monocarboxylic acid monomer (b). The above-mentioned polycarboxylic acid polymer (B) is still more preferably prepared by copolymerizing a monomer component containing 40 to 97% by weight of the polyalkylene glycol unsaturated monomer (a) and 60 to 3% by weight of the unsaturated monocarboxylic acid monomer (b) .

The above-mentioned polycarboxylic acid polymer prepared by copolymerizing a polyalkyleneimine alkylene oxide adduct monomer (B1) is preferably prepared by copolymerizing a monomer component essentially containing a polyalkylene glycol unsaturated monomer (a), an unsaturated monocarboxylic acid monomer (b), and a polyalkyleneimine alkylene oxide adduct monomer (c). More preferably, the polymer (B1) is prepared by copolymerizing a monomer component essentially containing 98 to 40% by weight of the polyalkylene glycol unsaturated monomer (a), 1 to 50% by weight of the unsaturated monocarboxylic acid monomer (b), and 1 to 50% by weight of the polyalkyleneimine alkylene oxide adduct monomer (c).

The above-mentioned polycarboxylic acid polymer having a polyalkylene glycol side chain essentially containing an oxyalkylene group containing 3 or more carbon atoms (B2) is preferably prepared by copolymerizing a monomer component essentially containing: a polyalkylene glycol unsaturated monomer (a) essentially containing an oxyalkylene group containing 3 or more carbon atoms as the polyalkylene glycol unsaturated monomer (a); and an unsaturated monocarboxylic acid monomer (b). More preferably, the polymer (B2) is prepared by copolymerizing a monomer component containing 1 to 99% by weight of the polyalkylene glycol unsaturated monomer (a) and 99 to 1% by weight of the unsaturated monocarboxylic acid monomer (b) . Still more preferably, the polymer (B2) is prepared by copolymerizing a monomer component containing 40 to 97% by weight of the polyalkylene glycol unsaturated monomer (a) and 60 to 3% by weight of the unsaturated monocarboxylic acid monomer (b).

The above-mentioned polycarboxylic acid polymer (B3) except for the above-mentioned polymers (B1) and (B2) is preferably prepared by copolymerizing a monomer component essentially containing a polyalkylene glycol unsaturated monomer (a) containing only an oxyethylene group as the polyalkylene glycol unsaturated monomer (a) and an unsaturated monocarboxylic acid monomer (b), and not containing a polyalkyleneimine alkylene oxide adduct monomer (c). More preferably, the polymer (B3) is prepared by copolymerizing a monomer component containing 1 to 99% by weight of the polyalkylene glycol unsaturatedmonomer (a) and 99 to 1% by weight of the unsaturated monocarboxylic acid monomer (b) . Still more preferably, the polymer (B3) is prepared by copolymerizing a monomer component containing 40 to 97% by weight of the polyalkylene glycol unsaturatedmonomer (a) and 60 to 3% by weight of the unsaturated monocarboxylic acid monomer (b). Hereinafter, the polyalkylene glycol unsaturated monomer (a), the unsaturated monocarboxylic acid monomer (b), and the polyalkyleneimine alkylene oxide adduct monomer (c) are also referred to as monomer (a), monomer (b), and monomer (c), respectively.

In the above-mentioned polymers (B) and (B1), the above-mentioned monomers forming these polycarboxylic polymers may be used singly or in combination of two or more species of them. If the proportion in these monomers is out of the above-mentioned ranges, the functions of the repeating unit formed from each of the monomers may not be effectively exhibited. Thereby, the functional effects of the present invention may be insufficiently exhibited. In the monomer component forming the above-mentioned polycarboxylic acid polymer (B), the proportion of the monomers (a) and (b) is a value represented by "% by weight" based on 100% by weight of the total weight of the monomers (a) and (b) . In the monomer component forming the above-mentioned polycarboxylic acid polymer (B1), each proportion of the monomer (a), (b), and (c) is a value represented by "% by weight" based on 100 % by weight of the total weight of the monomers (a), (b), and (c). In the present invention, another monomer other than the above-mentioned monomers may be used as mentioned below. If another monomer is used, it is preferable that the total monomers (a), (b), and (c) serve as a main component of the monomer component.

In the monomer component forming the above-mentioned polymer (B1), the polyalkylene glycol unsaturated monomer (a) has a polymerizable unsaturated group and a polyalkylene glycol chain. The above-mentioned polyalkylene glycol unsaturated monomer (a) is preferably a compound represented by the above formula (1), and more preferably a polyalkylene glycol ester monomer or an unsaturated alcohol polyalkylene glycol adduct.

The above-mentioned polyalkylene glycol ester monomer is a monomer having a structure in which an unsaturated group and a polyalkylene glycol chain are bonded to each other with an ester bond therebetween. Unsaturated carboxylic acid polyalkylene glycol ester compounds are preferred. Among them, (alkoxy) polyalkylene glycol mono (meth) acrylates are preferable. The above-mentioned unsaturated alcohol polyalkylene glycol adduct is a compound having a structure in which a polyalkylene glycol chain is added to an alcohol having an unsaturated group. Preferred examples of the unsaturated alcohol polyalkylene glycol adduct include vinyl alcohol alkylene oxide adducts, (meth)allyl alcohol alkylene oxide adducts, 3-butene-1-ol alkylene oxide adducts, isoprene alcohol (3-methyl-3-butene-1-ol) alkylene oxide adducts, 3-methyl-2-butene-1-ol alkylene oxide adducts, 2-methyl-3-butene-2-ol alkylene oxide adducts, 2-methyl-2-butene-1-ol alkylene oxide adducts.

If two or more species of the oxyalkylene groups represented by (R⁴O) in the above-mentioned formula (1) exist in one unsaturated alcohol polyalkylene glycol adduct, the oxyalkylene groups may be added randomly, alternatively, or in block.

The above-mentioned oxyalkylene group has a structure formed from one or two or more species of alkylene oxides such as ethylene oxide, propylene oxide, butylene oxide, isobutylene oxide, 1-butene oxide, and 2-butene oxide.

Among such alkylene oxide adducts, an ethylene oxide adduct, a propylene oxide adduct, and a butylene oxide adduct are preferable. More preferably, the oxyalkylene group is mainly formed from ethylene oxide.

The above-mentioned m representing an average molar number of addition of the oxyalkylene group represented by R⁴O is 1 to 300. If the m is more than 300, the polymerizability of the monomer is lowered. The preferable range of the m is 2 or more. The average molar number of addition of the oxyethylene group is preferably 2 or more in (R⁴O)m. If the m is less than 2 or the average molar number of addition of the oxyethylene group is less than 2, the hydrophilicity or steric hindrance enough to disperse cement particles and the like may not be obtained, and therefore excellent fluidity may not be obtained. The range of the m for excellent fluidity is preferably 3 or more, and 280 or less. The range of the m is more preferably 5 or more, and still more preferably 10 or more, and particularly preferably 20 or more. Further, the range of the m is more preferably 250 or less, and particularly preferably 150 or less. The average molar number of addition of the oxyethylene group is 3 or more and 280 or less. The average molar number of addition of the oxyethylene group is more preferably 10 or more and still more preferably 20 or more. Further, the average molar number of addition of the oxyethylene group is more preferably 250 or less and still more preferably 200 or less, and particularly preferably 150 or less. The range of the m for concrete with a low viscosity is preferably 3 or more and 100 or less. The range of the m is more preferably 4 or more and 50 or less, and still more preferably 4 or more and 30 or less, and particularly preferably 5 or more and 25 or less. The above-mentioned average molar number of addition means an average value of the molar number of the organic group added to 1 mole of the monomer.

Two or more species of monomers having different average molar numbers of addition "m" of the oxyalkylene group may be used in combination, as the above-mentioned unsaturated alcohol polyalkylene glycol adduct represented by the formula (1). Preferred combination thereof include a combination of two or more species of the monomers (a) in which a difference in the m is 10 or more (preferably, 20 or more), and a combination of three or more species of the monomers (a) in which a difference in the average molar number of addition "m" between each monomer is 10 or more (preferably, 20 or more). As the range of the m in such combinations, the following combinations may be adopted for example: combinations of the monomer (a) in which the average molar number of addition "m" is 40 to 300 and the monomer (a) in which the average molar number of addition "m" is 1 to 40 (a difference in the m is 10 or more, and preferably 20 or more), and combinations of the monomer (a) in which the average molar number of addition "m" is 20 to 300 and the monomer (a) in which the average molar number of addition "m" is 1 to 20 (a difference in the m is 10 or more, and preferably 20 or more). In the above-mentioned R⁵, the hydrophobicity of the polycarboxylic acid polymer becomes too high if the carbon atoms are more than 20. Thereby, excellent dispersibility may not be obtained. The preferred embodiment of the R⁵ is a hydrocarbon group containing 1 to 20 carbon atoms or hydrogen in terms of dispersibility. The R¹¹ is more preferably a hydrocarbon group containing 10 or less carbon atoms, and still more preferably 3 or less carbon atoms, andparticularlypreferably 2 or less carbon atoms. Among the hydrocarbon groups, saturated alkyl groups and unsaturated alkyl groups are preferred. These alkyl groups may have a straight structure or a branched structure. Hydrocarbon groups containing 5 or more and 20 or less carbon atoms are preferable for exhibition of excellent segregation preventing performance or for appropriate amount of air entrained into the cement composition. More preferred are hydrocarbon groups containing 5 to 10 carbon atoms. Saturated alkyl groups and unsaturated alkyl groups are preferable among the hydrocarbon groups. These alkyl groups may have a straight structure or branched structure.

Preferred examples of the above-mentioned unsaturated alcohol polyalkylene glycol adduct include polyethylene glycol monovinyl ether, polyethylene glycol monoallyl ether, polyethylene glycol mono(2-methyl-2-propenyl) ether, polyethylene glycol mono (2-butenyl) ether, polyethylene glycol mono(3-methyl-3-butenyl) ether, polyethylene glycol mono(3-methyl-2-butenyl) ether, polyethylene glycol mono(2-methyl-3-butenyl) ether, polyethylene glycol mono(2-methyl-2-butenyl) ether, polyethylene glycol mono (1,1-dimethyl-2-propenyl) ether, polyethylene polypropylene glycol mono(3-methyl-3-butenyl) ether, methoxypolyethylene glycol mono(3-methyl-3-butenyl) ether, ethoxypolyethylene glycol mono(3-methyl-3-butenyl) ether, 1-propoxypolyethylene glycol mono (3-methyl-3-butenyl) ether, cyclohexyloxypolyethylene glycol mono(3-methyl-3-butenyl) ether, 1-octyloxypolyethylene glycol mono (3-methyl-3-butenyl) ether, nonylalkoxypolyethylene glycol mono(3-methyl-3-butenyl) ether, laurylalkoxypolyethylene glycol mono(3-methyl-3-butenyl) ether, stearylalkoxypolyethylene glycol mono(3-methyl-3-butenyl) ether, phenoxypolyethylene glycol mono(3-methyl-3-butenyl) ether, naphthoxypolyethylene glycol mono(3-methyl-3-butenyl) ether, methoxypolyethylene glycol monoallyl ether, ethoxypolyethylene glycolmonoallyl ether, phenoxypolyethylene glycol monoallyl ether, methoxypolyethylene glycol mono(2-methyl-2-propenyl) ether, ethoxypolyethylene glycol mono(2-methyl-2-propenyl) ether, and phenoxypolyethylene glycol mono(2-methyl-2-propenyl) ether.

The above-mentioned (alkoxy) polyalkylene glycol mono (meth) acrylate is preferably a compound represented by the following formula (3). 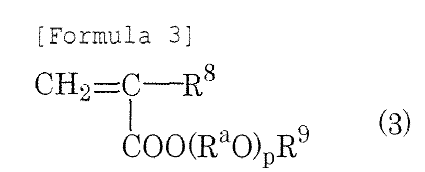 in the above-mentioned formula (3), R⁸ representing a hydrogen atom or a methyl group;
R^{a} being the same or different and each representing an alkylene group containing 2 to 18 carbon atoms;
R⁹ representing a hydrogen atom or a hydrocarbon group containing 1 to 30 carbon atoms;
p representing an average molar number of addition of an oxyalkylene group represented by R^{a}O and being the number of 2 to 300. The above-mentioned oxyalkylene group represented by R^{a}O preferably contains 2 to 4 carbon atoms.

It is preferable in terms of improvement in productivity of esterification with (meth) acrylic acid that an ethylene oxide part is added to an ester bond with (meth) acrylic acid. The above-mentioned p representing an average molar number of addition of the oxyalkylene group represented by R^{a}O is 2 to 300. If the p is more than 300, the polymerizability of the monomer is lowered. The preferable range of the p is 2 or more. The average molar number of addition of the oxyethylene group is preferably 2 or more in -(R^{a}O)m-. If the p is less than 2 or the average molar number of addition of the oxyethylene group is less than 2, the hydrophilicity or the steric hindrance enough to disperse cement particles and the like may not be obtained, and therefore excellent fluidity may not be obtained. The range of the p for excellent fluidity is preferably 3 or more, and 280 or less. The range of p is more preferably 5 or more, and still more preferably 10 or more, and particularly preferably 20 or more. Further, the range of p is more preferably 250 or less, and still more preferably 200 or less, and particularly preferably 150 or less . The average molar number of addition of the oxyethylene group is 5 or more and 250 or less. The average molar number of addition of the oxyethylene group is more preferably 10 or more and still more preferably 20 or more. Further, the average molar number of addition of the oxyethylene group is more preferably 200 or less and still more preferably 150 or less. The range of the p for concrete with a low viscosity is preferably 3 or more and 100 or less. The range of the p is more preferably 4 or more and 50 or less, and still more preferably 4 or more and 30 or less, and particularly preferably 5 or more and 25 or less. The above-mentioned average molar number of addition means an average value of the molar number of the organic group added to 1 mole of the monomer.

As the above-mentioned (alkoxy)polyalkylene glycol mono(meth)acrylate represented by the above formula (3), two or more species of monomers having different average molar numbers of addition "p" of the oxyalkylene group may be used in combination. Preferred combinations thereof include a combination of two or more species of the monomers (a) in which a difference in the p is 10 or more (preferably, 20 or more), and a combination of three or more species of the monomers (a) in which a difference in the average molar number of addition "p" between each monomer is 10 or more (preferably, 20 or more) . As the range of the p in such combinations, the following combinations may be adopted for example: a combination of the monomer (a) in which the average molar number of addition "p" is 40 to 300 and the monomer (a) in which the average molar number of addition "p" is 2 to 40 (a difference in the m is 10 or more, and preferably 20 or more), and a combination of the monomer (a) in which the average molar number of addition "p" is 20 to 300 and the monomer (a) in which the average molar number of addition "p" is 2 to 20 (a difference in p is 10 or more, and preferably 20 or more). In the above-mentioned R¹³, the hydrophobicity of the polycarboxylic acid polymer becomes too high if the carbon atoms are more than 30. Thereby, excellent dispersibility may not be obtained. The preferred embodiment of the R⁹ is a hydrocarbon group containing 1 to 20 carbon atoms or hydrogen in terms of dispersibility. The R⁹ is more preferably a hydrocarbon group containing 10 or less carbon atoms, and still more preferably 3 or less carbon atoms, and particularly preferably 2 or less carbon atoms. Among the hydrocarbon groups, saturated alkyl groups and unsaturated alkyl groups are preferred. These alkyl groups may have a straight structure or a branched structure. Hydrocarbon groups containing 5 or more and 20 or less carbon atoms are preferable for exhibition of excellent segregation preventing performance or for appropriate amount of air entrained into the cement composition. More preferred are hydrocarbon groups containing 5 to 10 carbon atoms. Saturated alkyl groups and unsaturated alkyl groups are preferable among the hydrogen groups. These alkyl group may have a straight structure or branched structure.

Preferred examples of the above-mentioned (alkoxy)polyalkylene glycol mono(meth)acrylate include esterfied products of (meth)acrylic acid with alkoxypolyalkylene glycols, particularly alkoxypolyalkylene glycols mainly containing an ethylene oxide, the alkoxypolyalkylene glycols being prepared by adding 1 to 300 mole of alkylene oxides containing 2 to 18 carbon atoms to any of: fatty alcohols containing 1 to 30 carbon atoms such as methanol, ethanol, 1-propanol, 2-propanol, 1-butanol, 2-buthanol, 1-pentanol, 2-pentanol, 3-pentanol, 1-hexanol, 2-hexanol, 3-hexanol, octanol, 2-ethyl-1-hexanol, nonyl alcohol, lauryl alcohol, cetyl alcohol, and stearyl alcohol; alicyclic alcohols containing 3 to 30 carbon atoms such as cyclohexanol; and unsaturated alcohols containing 3 to 30 carbon atoms such as (meth)allyl alcohol, 3-butene-1-ol, and 3-methyl-3-butene-1-ol.

The above-mentioned esterified products are preferably the following (alkoxy)polyethylene glycol (poly) (alkylene glycol containing 2 to 4 carbon atoms) (meth)acrylates.

Methoxypolyethylene glycol mono(meth)acrylate, methoxy{polyethylene glycol (poly)propylene glycol} mono (meth) acrylate, methoxy {polyethylene glycol (poly)butylene glycol} mono(meth)acrylate, methoxy{polyethylene glycol (poly)propylene glycol (poly)butylene glycol} mono (meth) acrylate, ethoxypolyethylene glycol mono(meth)acrylate, ethoxy{polyethylene glycol (poly)propylene glycol} mono (meth) acrylate, ethoxy{polyethylene glycol (poly)butylene glycol} mono(meth)acrylate, ethoxy{polyethylene glycol (poly)propylene glycol (poly)butylene glycol} mono(meth)acrylate, propoxypolyethylene glycol mono(meth)acrylate, propoxy {polyethylene glycol (poly)propylene glycol} mono(meth)acrylate, propoxy{polyethylene glycol (poly)butylene glycol} mono(meth)acrylate, propoxy{polyethylene glycol (poly)propylene glycol (poly)butylene glycol} mono(meth)acrylate, butoxypolyethylene glycol mono(meth)acrylate, butoxy{polyethylene glycol (poly)propylene glycol} mono(meth)acrylate, butoxy{polyethylene glycol (poly)butylene glycol} mono(meth)acrylate, butoxy{polyethylene glycol (poly)propylene glycol (poly)butylene glycol} mono(meth)acrylate, pentoxypolyethylene glycol mono(meth)acrylate, pentoxy{polyethylene glycol (poly)propylene glycol} mono (meth) acrylate, pentoxy{polyethylene glycol (poly)butylene glycol} mono (meth) acrylate, pentoxy{polyethylene glycol (poly)propylene glycol (poly)butylene glycol} mono(meth)acrylate, hexoxypolyethylene glycol mono(meth)acrylate, hexoxy{polyethylene glycol (poly)propylene glycol} mono (meth) acrylate, hexoxy{polyethylene glycol (poly)butylene glycol} mono (meth) acrylate, hexoxy{polyethylene glycol (poly) propylene glycol (poly) butylene glycol } mono (meth) acrylate,
heptoxypolyethylene glycol mono (meth) acrylate, heptoxy{polyethylene glycol (poly)propylene glycol} mono (meth) acrylate, heptoxy{polyethylene glycol (poly) butylene glycol} mono(meth)acrylate, heptoxy{polyethylene glycol (poly)propylene glycol (poly) butylene glycol} mono (meth) acrylate, octoxypolyethylene glycol mono(meth)acrylate, octoxy{polyethylene glycol (poly)propylene glycol} mono(meth)acrylate, octoxy{polyethylene glycol (poly)butylene glycol} mono(meth)acrylate, octoxy{polyethylene glycol (poly)propylene glycol (poly)butylene glycol} mono(meth)acrylate, nonanoxypolyethylene glycol mono(meth) acrylate, nonanoxy{polyethylene glycol(poly)propylene glycol} mono (meth) acrylate, nonanoxy{polyethylene glycol (poly)butylene glycol} mono (meth) acrylate, nonanoxy{polyethylene glycol (poly)propylene glycol (poly)butylene glycol} mono(meth)acrylate,
decanoxypolyethylene glycol mono(meth)acrylate, decanoxy{polyethylene glycol (poly)propylene glycol} mono(meth)acrylate, decanoxy{polyethylene glycol (poly)butylene glycol} mono(meth)acrylate, decanoxy{polyethylene glycol (poly)propylene glycol (poly)butylene glycol} mono(meth)acrylate, undecanoxypolyethylene glycol mono(meth)acrylate, undecananoxy{polyethylene glycol (poly)propylene glycol} mono (meth) acrylate, undecanoxy{polyethylene glycol (poly)butylene glycol} mono(meth)acrylate, undecanoxy{polyethylene glycol (poly)propylene glycol (poly)butylene glycol} mono (meth) acrylate, dodecanoxypolyethylene glycol mono(meth) acrylate, dodecanoxy{polyethylene glycol (poly)propylene glycol} mono(meth)acrylate, dodecanoxy{polyethylene glycol (poly)butylene glycol} mono(meth)acrylate, dodecanoxy{polyethylene glycol (poly)propylene glycol (poly)butylene glycol} mono(meth)acrylate,
tridecanoxypolyethylene glycol mono(meth)acrylate, tridecanoxy{polyethylene glycol (poly)propylene glycol} mono(meth)acrylate, tridecanoxy{polyethylene glycol (poly)butylene glycol} mono(meth)acrylate, tridecanoxy(polyethylene glycol (poly)propylene glycol (poly)butylene glycol} mono(meth)acrylate, tetradecanoxypolyethylene glycol mono(meth)acrylate, tetradecanoxy{polyethylene glycol (poly)propylene glycol} mono(meth)acrylate, tetradecanoxy{polyethylene glycol (poly)butylene glycol} mono(meth)acrylate, tetradecanoxy{polyethylene glycol (poly)propylene glycol (poly)butylene glycol} mono(meth)acrylate, pentadecanoxypolyethylene glycol mono(meth)acrylate, pentadecanoxy{polyethylene glycol (poly)propylene glycol} mono(meth)acrylate, pentadecanoxy{polyethylene glycol (poly)butylene glycol} mono(meth)acrylate, pentadecanoxy{polyethylene glycol (poly)propylene glycol (poly)butylene glycol} mono(meth)acrylate, hexadecanoxypolyethylene glycol mono(meth)acrylate, hexadecanoxy{polyethylene glycol (poly)propylene glycol} mono(meth)acrylate, hexadecanoxy{polyethylene glycol (poly)butylene glycol} mono(meth)acrylate, hexadecanoxy{polyethylene glycol (poly)propylene glycol (poly)butylene glycol} mono(meth)acrylate, heptadecanoxypolyethylene glycol mono(meth) acrylate, heptadecanoxy{polyethylene glycol (poly)propylene glycol} mono(meth)acrylate, heptadecanoxy{polyethylene glycol (poly)butylene glycol} mono(meth)acrylate, heptadecanoxy{polyethylene glycol (poly)propylene glycol (poly)butylene glycol} mono(meth)acrylate, octadecanoxypolyethylene glycol mono (meth) acrylate, octadecanoxy{polyethylene glycol (poly)propylene glycol} mono (meth) acrylate, octadecanoxy{polyethylene glycol (poly) butylene glycol} mono (meth) acrylate, octadecanoxy{polyethylene glycol (poly) propylene glycol (poly) butylene glycol} mono (meth) acrylate,
nonadecanoxypolyethylene glycol mono (meth) acrylate, nonadecanoxy{polyethylene glycol (poly)propylene glycol} mono(meth)acrylate, nonadecanoxy{polyethylene glycol (poly)butylene glycol } mono(meth)acrylate, nonadecanoxy{polyethylene glycol (poly)propylene glycol (poly)butylene glyco} mono(meth)acrylate, cyclopentoxypolyethylene glycol mono(meth)acrylate, cyclopentoxy{polyethylene glycol (poly)propylene glycol} mono(meth)acrylate, cyclopentoxy{polyethylene glycol (poly)butylene glycol} mono(meth)acrylate, cyclopentoxy {polyethylene glycol (poly)propylene glycol (poly)butylene glycol} mono(meth)acrylate, cyclohexoxypolyethylene glycol mono (meth) acrylate, cyclohexoxy {polyethylene glycol (poly)propylene glycol} mono(meth)acrylate, cyclohexoxy{polyethylene glycol (poly)butylene glycol} mono(meth)acrylate, and cyclohexoxy{polyethylene glycol (poly)propylene glycol (poly)butylene glycol} mono(meth)acrylate.

Preferred examples of the above-mentioned (alkoxy) polyalkylene glycol mono(meth)acrylates include, in addition to the above-mentioned compounds represented by the formula (3), phenoxypolyethylene glycol mono(meth)acrylate, phenoxy{polyethylene glycol (poly)propylene glycol} mono(meth)acrylate, phenoxy{polyethylene glycol (poly)butylene glycol} mono(meth)acrylate, phenoxy{polyethylene glycol (poly)propylene glycol (poly)butylene glycol} mono(meth)acrylate, (meth)allyloxypolyethylene glycol mono(meth)acrylate, (meth)allyloxy{polyethylene glycol (poly)propylene glycol} mono(meth)acrylate, (meth)allyloxy{polyethylene glycol (poly)butylene glycol} mono (meth) acrylate, and (meth)allyloxy{polyethylene glycol (poly)propylene glycol (poly)butylene glycol} mono (meth) acrylate.

As the above-mentioned polyalkylene glycol ester monomer, (alkoxy)polyalkylene glycol monomaleates and (alkoxy)polyalkylene glycol dimaleates are preferred in addition to (alkoxy) polyalkylene glycol mono (meth) acrylates. The following compounds are preferred as such monomers. Half esters or diesters of the above-mentioned unsaturated dicarboxylic acid monomer with an alkylpolyalkylene glycol prepared by adding 1 to 300 mole of an oxyalkylene containing 2 to 4 carbon atoms to an alcohol containing 1 to 22 carbon atoms or an amine containing 1 to 22 carbon atoms; half esters or diesters of the above-mentioned unsaturated dicarboxylic acid monomer and a polyalkylene glycol in which an average molar number of addition of a glycol containing 2 to 4 carbon atoms is 2 to 300; (poly)alkylene glycol di(meth)acrylates such as triethylene glycol di (meth) acrylate, (poly) ethylene glycol di(meth)acrylate, polypropylene glycol di(meth)acrylate, and (poly) ethylene glycol (poly) propylene glycol di (meth) acrylate; and (poly) alkylene glycol dimaleates such as triethylene glycol dimaleate and polyethylene glycol dimaleate.

In the monomer component forming the above-mentioned polymer (B), the unsaturated monocarboxylic acid monomer (b) is a monomer containing a polymerizable unsaturated group and a group capable of forming a carboanion. Unsaturated monocarboxylic acid monomers and the like are preferable. The above-mentioned unsaturated monocarboxylic acid monomers are monomers having one unsaturated group and one group capable of forming a carboanion in the molecule. Compounds represented by the following formula (2) may be mentioned as the preferable embodiment.

The above-mentioned R⁶ is preferably a hydrogen atom. The above-mentioned R⁷ is preferably a hydrogen atom.

Examples of the metal atom in M¹ of the above-mentioned formula (2) include monovalent metal atoms such as alkali metal atoms such as lithium, sodium, and potassium; divalent metal atoms such as alkaline earth metal atoms such as calcium and magnesium; and trivalent metal atoms such as aluminum and iron. Preferred examples of the organic amine group include alkanolamine groups such as ethanolamine group, diethanolamine group, and triethanolamine group, and triethylamine group. Further, the M may be an ammonium group. Preferred examples of such unsaturatedmonocarboxylic acid monomers include acrylic acid, methacrylic acid, and crotonic acid; and monovalent metal salts thereof, divalent metal salts thereof, ammonium salts thereof, and organic amine salts thereof. Among them, use of methacrylicacid, monovalentmetal salts thereof, divalent metal salts thereof, ammonium salts thereof, or organic amine salts thereof is preferable in terms of improvement in cement dispersibility and preferable as the unsaturatedmonocarboxylic acid monomer (b).

In the monomer component forming the above-mentioned polymer (B1), the polyalkyleneimine alkylene oxide adduct monomer (c) is polyalkyleneimine having an unsaturated group and an oxyalkylene group. As the production method of such a monomer (c), for example, preferred is a method of preparing a compound in which an alkylene oxide is added to a nitrogen atom of an amino group or an imino group contained in the above-mentioned polyalkyleneimine (polyalkyleneimine alkylene oxide adduct not containing a polymerizable unsaturated double bond) and reacting this compound with an unsaturated compound having a functional group capable of reacting with the hydrogen group, the amino group, or the imino group contained in the compound. The following methods are preferably employed as the method of introducing an unsaturated group into the compound in which an alkylene oxide is added to polyalkyleneimine in the production of the above-mentioned polyalkyleneimine alkylene oxide adduct monomer (c). Transesterification of the hydroxyl group contained in the compound in which an alkylene oxide is added to polyalkyleneimine with an unsaturated compound such as (meth)acrylic acid and (meth)acrylic acid alkyl ester; amidation of the amino group contained in the compound in which an alkylene oxide is added to polyalkyleneimine with an unsaturated compound such as (meth)acrylic acid and (meth)acrylic acid alkyl ester; and reaction of the hydroxyl group contained in the compound in which an alkylene oxide is added to polyalkyleneimine with an epoxy compound such as glycidyl (meth)acrylate and (meth)allyl glycidyl ether.

The above-mentioned compound in which an alkylene oxide is added to polyalkyleneimine and preferred embodiments thereof are the same as in the above-mentioned polyalkyleneimine alkylene oxide adduct not containing a polymerizable unsaturated double bond in the polyalkyleneimine alkylene oxide adduct monomer (c).

Preferred examples of the above-mentioned unsaturated compound include unsaturated monocarboxylic acids such as (meth) acrylic acid; unsaturated carboxylic acid anhydrides such as (meth)acrylic acid anhydride; unsaturated carboxylic acid halides such as (meth)acrylic acid chloride; unsaturated carboxylic acid esters such as (meth) acrylic acid alkyl esters containing 1 to 30 carbon atoms, maleic acid monoesters containing 1 to 30 carbon atoms, and maleic acid diesters containing 1 to 30 carbon atoms; and epoxy compounds such as glycidyl (meth) acrylate and (meth) allyl glycidyl ether. One or two or more species of them may be used.

As one preferable example of reactions for preparing the above-mentioned polyalkyleneimine alkylene oxide adduct monomer (c), mentioned may be a reaction of synthesizing polyethyleneimine using an initiator and ethyleneimine, and then preparing a polyethyleneimine ethylene oxide adduct by adding ethylene oxide to a nitrogen atom having an active hydrogen atom contained in the prepared polyethylene imine, and then performing transesterification reaction of this adduct with methacrylic acid. The polyalkyleneimine alkylene oxide adduct monomer (c) can be also prepared by a method of synthesizing polyethyleneimine, and preparing a polyethyleneimine ethylene oxide adduct by adding an ethylene oxide to a nitrogen atom having an active hydrogen atom contained in the prepared polyethyleneimine, and then reacting this adduct with glycidyl methacrylate.

The monomer component forming the polycarboxylic acid polymer (B) or the polycarboxylic acid polymer prepared by copolymerizing a polyalkyleneimine alkylene oxide adduct monomer (B1) may further contain another monomer (d) other than the above-mentioned monomers (a), (b), and (c), if necessary. The following compounds are preferred as the another monomer (d). These may be used singly or in combination of two or more species of them. Styrene compounds such as styrene, bromostyrene, chlorostyrene, and methyl styrene; diene compounds such as 1,3-butadiene, isoprene, and isobutylene; (meth)acrylates such as methyl (meth)acrylate, ethyl (meth) acrylate, butyl (meth)acrylate, pentyl (meth) acrylate, hexyl (meth)acrylate, decyl (meth)acrylate, and lauryl (meth) acrylate; α-olefins such as hexene, heptene, and decene; alkyl vinyl ethers such as methyl vinyl ether, ethyl vinyl ether, and butyl vinyl ether; vinyl esters such as vinyl acetate; and allyl esters such as allyl acetate.

Difunctional (meth)acrylates such as hexanediol di(meth)acrylate, trimethylolpropane tri(meth)acrylate, and trimethylolpropane di(meth) acrylate; unsaturated sulfonic acids such as vinyl sulfonate, (meth) allyl sulfonate, 2-(meth)acryloxy ethyl sulfonate, 3-(meth)acryloxy propyl sulfonate, 3-(meth)acryloxy-2-hydroxypropyl sulfonate, 3-(meth)acryloxy 2-hydroxypropyl sulfophenyl ether, 3-(meth)acryloxy-2-hydroxypropyloxysulfobenzoate, 4-(meth)acryloxy butylsulfonate, (meth)acrylamide methylsulfonate, (meth)acrylamide ethylsulfonate, 2-(meth)acrylamine methylpropane sulfonate, and styrene sulfonate; and monovelent metal salts thereof, divalent metal salts thereof, ammonium salts thereof and oragnic amine salts thereof.

Unsaturated amide compounds such as (meth) acrylamide, (meth) amide, N-methylol (meth) acrylamide, and N,N-dimethyl (meth)acrylamide; allyl compounds such as allyl alcohol; unsaturated amino compounds such as dimethylamino ethyl (meth) acrylate; and vinyl ethers or allyl ethers such as methoxypolyethylene glycol monovinyl ether, polyethylene glycol monovinyl ether, methoxy polyethylene glycol mono (meth) allyl ether, and polyethylene glycol mono (meth) allyl ether.

(Meth)acrylate compounds such as hydroxyethyl (meth) acrylate, hydroxypropyl (meth)acrylate, methoxyethyl (meth)acrylate, ethoxyethyl (meth)acrylate, butoxyethyl ethyl(meth)acrylate, and methoxypropyl (meth)acrylate.

Preferred examples of the above-mentioned sulfonic acid compound (C) include ligninsulfonic acid; lignin sulfonate; naphthalene sulfonic acid; naphthalene sulfonate; naphthalene sulfonic acid formalin condensate; melamine sulfonic acid; melamine sulfonate; melamine sulfonic acid formalin condensate; and polystyrene sulfonate. These may be used singly or in combination of two or more species of them. The above-mentioned another monomer (d) includes no unsaturated dicarboxylic acid monomers such as maleic acid.

The copolymerization method of the monomer component in the production method oftheabove-mentioned polycarboxylic acid polymer (B) is described below.

The above-mentioned copolymerization can be performed by a conventional polymerization method such as solution polymerization and block polymerization using the monomer component and a polymerization initiator, for example. Conventionally used polymerization initiators may be used as the polymerization initiator. Preferred examples of such polymerization initiators include persulfates such as ammonium persulfate, sodium persulfate, and potassium persulfate; hydrogen peroxide; azo compounds such as azobis-2-methylpropioneamidine hydrochloride and azoisobutyronitrile; and peroxides such as benzoyl peroxide, lauroyl peroxide, and cumene hydroperoxide. The following compounds and the like may be used in combination as an accelerator. Reducing agents such as sodium hydrogensulfite, sodium sulfite, Mohr's salt, sodium pyrobisulfite, sodium formaldehyde sulfoxylate, and ascorbic acid; and amine compounds such as ethylenediamine, sodium ethylenediaminetetraacetate, and glycine. Each of the polymerization initiators and the accelerators may be used singly or in combination of two or more species of them.

A chain transfer agent may be used if necessary in the above-mentioned copolymerization method. One or two or more species of conventionally used chain transfer agents may be used as such a chain transfer agent. Hydrophilic chain transfer agents are preferably used, but hydrophobic chain transfer agents also may be used, if necessary.

Hydrophobic chain transfer agents also may be used in the above-mentioned copolymerization method if the monomer component contains the monomer having an oxyalkylene group, that is, one or two or more species of the polyalkylene glycol unsaturated monomers (a). Examples of the above-mentioned hydrophilic chain transfer agents include thiol chain transfer agents such as mercaptoethanol, thioglycerol, thioglycolic acid, mercaptopropionic acid, 2-mercaptopropionic acid, 3-mercaptopropionic acid, thiomalic acid, and 2-mercaptoethanesulfonic acid; primary alcohols such as 2-aminopropane-1-ol; secondary alcohols such as isopropyl alcohol; and lower oxides and salts thereof, such as phosphorous acid, phosphinic acid and salts thereof (sodium hypophosphite, potassium hypophosphite, and the like), sulfurous acid, hydrogen sulfite, dithionic acid, and metabisulfurous acid and salts thereof (sodium sulfite, sodium hydrogensulfite, sodium dithionite, sodiummetabisulfite, potassium sulfite, potassium hydrogensulfite, potassiumdithionite, potassium metabisulfite, and the like) The above-mentioned hydrophilic chain transfer agent may be used in combination with one or two or more of hydrophobic chain transfer agents, if necessary.

Thiol compounds containing a hydrocarbon group containing 3 or more carbon atoms and compounds having a solubility of 10% or less to water at 25°C are preferred as the above-mentioned hydrophobic chain transfer agents. Preferred examples of such compounds include, in addition to the above-mentioned chain transfer agents, thiol chain transfer agents such as butane thiol, octane thiol, decane thiol, dodecane thiol, hexadecane thiol, octadecane thiol, cyclohexyl mercaptan, thiophenol, octyl thioglycolate, octyl 2-mercaptopropionate, octyl 3-mercaptopropionate, mercaptopropionate 2-ethylhexyl ester, octanoate 2-mercaptoethyl ester, 1,8-dimercapto-3,6-dioxaoctane, decanetrithiol, and dodecyl mercaptan; halides such as carbon tetrachloride, carbon tetrabromide, methylene chloride, bromoform, and bromotrichloroethane; and unsaturated hydrocarbon compounds such as α-methyl styrene dimer, α-terpinene, γ-terpinene, dipentene, and terpinolene. These may be used singly or in combination of two or more species of them. It is more preferable that thiol chain transfer agents containing a hydrocarbon group containing 3 or more carbon atoms are included among them.

Continuous charging method such as dropwise addition and addition in portions may be adopted as the addition method of the above-mentioned chain transfer agent to a reaction container. The chain transfer agent may be singly introduced into a reaction container, or may be previously mixed with the monomer containing an oxyalkylene group constituting the monomer component, a solvent, and the like.

The above-mentioned copolymerization method may be performed by batchwise method or continuous method. Conventionally used solvents may be used as the solvent which is used if necessary in the copolymerization. Preferable examples of such solvents include water; alcohols such as methyl alcohol, ethyl alcohol, and isopropyl alcohol; aromatic or aliphatic hydrocarbons such as benzene, toluene, xylene, cyclohexane, and n-heptane; esters such as ethyl acetate; and ketones such as acetone and methyl ethyl ketone.

These may be used singly or in combination of two or more species of them. Among them, it is preferable that one or two or more species of solvents selected from the group consisting of water and lower alcohols containing 1 to 4 carbon atoms in view of solubility of the monomer component and the obtained polycarboxylic acid polymer.

The following methods are preferable as the addition method of the monomer component, the polymerization initiator and the like to a reaction container in the above-mentioned copolymerization. Method of performing the copolymerization by charging the total monomer component into a reaction container and adding the polymerization initiator thereto; method of performing the copolymerization by charging part of the monomer component into a reaction container and adding the rest of the monomer component and the polymerization initiator thereto; and method of charging the polymerization solvent into a reaction container and adding the total amount of the monomer component and the polymerization initiator thereto. Among such methods, the copolymerization method is preferably performed by successively adding dropwise the polymerization initiator and the monomer component into the reaction container because such a method makes it possible to produce a polymer having a narrow (sharp) molecular weight distribution and improve cement dispersibility which is a function of enhancing the fluidity of cement compositions and the like. It is preferable that the copolymerization reaction is performed while the concentration of water is kept to 50% or less in the reaction container during the copolymerization, because the copolymerizability of the monomer component is improved and thereby the storage stability of the obtained polymer is more improved. The concentration of water is more preferably kept to 40% or less, and still more preferably 30% or less. Copolymerization conditions such as copolymerization temperature are appropriately determined depending on the copolymerization method, solvent, polymerization initiator, chain transfer agent to be used. The copolymerization temperature is preferably 0°C or more and 150°C or less, generally. The copolymerization temperature is more preferably 40°C or more, and still more preferably 50°C or more, and particularly preferably 60°C or more. Also, the copolymerization temperature is more preferably 120°C or less, and still more preferably 100°C or less, and particularly preferably 85°C.

The polymer obtained by the above-mentioned copolymerization method may be used as it is as a main component of the cement admixture. However, the polymer may be used after further neutralized with an alkali substance if necessary. Inorganic salts such as hydroxides, chlorides, and carbonates of monovalent metals and divalent metals; ammonia; and organic amines are preferably used as the alkali substance.

In the above-mentioned copolymerization method, it is preferable that the monomer component is copolymerized such that the neutralization degree of the above-mentioned unsaturated monocarboxylic acid monomer (b) is 0 to 60 mol%. The neutralization degree of the unsaturated monocarboxylic acid monomer (b) means the unsaturated monocarboxylic acid monomer (b) forming the salts based on 100 mol% of the total molar number of the unsaturated monocarboxylic acid monomer (b), and the unsaturated monocarboxylic acid monomer (b) forming the salts is represented by "mol%". If the neutralization degree of the unsaturatedmonocarboxylic acidmonomer (b) is more than 60 mol%, the polymerization rate in the copolymerization step is not increased, possibly resulting in reduction in the molecular weight of the obtained polymer or reduction in the production efficiency. The neutralization degree of the unsaturated monocarboxylic acid monomer (b) is more preferably 50 mol% or less, still more preferably 40 mol % or less, still more preferably 30 mol% or less, particularly preferably 20 mol% or less, and most preferably 10 mol% or less.

The following methods are preferably adopted as the above-mentioned method of performing the copolymerization such that the neutralization degree of the unsaturated monocarboxylic acid monomer (b) is 0 to 60 mol%. Method of copolymerizing the monomer component using only acid type unsaturated monocarboxylic acid monomers (b), that is, the unsaturated monocarboxylic acid monomers (b) in which M in the above-mentioned formula (2) is a hydrogen atom, without neutralization; and method of copolymerizing the monomer component using the unsaturated monocarboxylic acid monomers (b) neutralized such that the neutralization degree is 0 to 60 mol% when neutralized with the alkali substance to form a salt such as sodium salt and ammonium salt.

The polycarboxylic acid polymer (B) or the polycarboxylic acid polymer prepared by copolymerizing a polyalkyleneimine alkylene oxide adductmonomer (B1) are prepared by copolymerizing the monomer component as mentioned above, with respect to the molecular weight of such polymers, it is preferable that the weight average molecular weight (Mw) on polyethylene glycol equivalent basis, measured by gel permeation chromatography (hereinafter, referred to as "GPC") is 500 or more and 500000 or less. If the weight average molecular weight is less than 500, the water-reducing performance of these polycarboxylic acid polymers may be reduced. If the weight average molecular weight is more than 500000, the water-reducing performance and the slump loss-preventing ability of these polycarboxylic acid polymers may be reduced. The weight average molecular weight is more preferably 5000 or more, and most preferably 8000 or more. The weight average molecular weight is more preferably 300000 or less, and most preferably 100000 or less.

The weight average molecular weight of the polymer (B) in the present description is a value measured under the following GPC measurement conditions.

### (GPC molecular weight measurement conditions)

Used column: product of TOSOH Corp. TSKguardcolumn SWXL+TSKge1 G4000SWXL+G3000SWXL+G2000SWXI
Eluent: An eluent solution prepared by melting sodium acetate trihydrate 115.6 g into a mixed solvent of water 10999 g and acetonitrile 6001 g, and adjusting the mixture to pH 6.0 with acetic acid.
Injected amount: 0.5% eluent solution 100 µL
Eluent flow rate: 0.8 mL/min
Column temperature: 40°C
Standard substance: Polyethylene glycol, peak top molecular weight (Mp) 272500, 219300, 85000, 46000, 24000, 12600, 4250, 7100, 1470.
Calibration curve order: cubic polynomial
Detector: product of Japan Waters 410 differential refraction index detector
Analysis software: product of Japan Waters, MILLENNIUM Ver.5.00

The cement admixture of the present invention essentially contains the adduct (A); the adduct (A) or the polycarboxylic acid polymer (B) ; the adduct (A) and the sulfonic acid compound (C); or the adduct (A), the polycarboxylic acid polymer (B), and the sulfonic acid compound (C). Such a cement admixture means an agent which can be added into a cement composition and the like, that is, an agent containing a cement additive and the like. The preferable embodiments of the present invention include such a cement admixture containing the above-mentioned essential components as main components.

The above-mentioned adduct (A) and polycarboxylic acid polymer (B) are preferable as main components of the cement additive. These components can constitute the cement additive of the present invention. Such a cement additive is described below. The above-mentioned cement additive is added into a cement composition such as cement paste, mortar, and concrete and then used. The additive also can be used for ultrahigh strength concretes. Conventionally used cement compositions containing cement, water, a fine aggregate, a coarse aggregate, or the like are preferably used as the above-mentioned cement composition. Cement compositions containing pulverized substances such as fly ash, blast furnace slag, silica fumes, and limestone may be used. The ultrahigh strength concretes mean those generally called like that in the cement composition field, that is, concretes forming hardened products with strength equivalent to or higher than that in hardened products formed from conventional concretes even at a water/cement ratio smaller than that in the conventional concretes. For example, such ultrahigh strength concretes mean concretes: having workability enough not to affect the conventional use even at a water/cement ratio of 25% by weight or less, further 20% by weight or less, particularly 18% by weight or less, particularly 14% by weight or less, and particularly around 12% by weight ; and forming a hardened product showing a compressive strength of 60 Ns/mm² or more, further 80 Ns/mm² or more, further 100 Ns/mm² or more, particularly 120 Ns/mm² or more, particularly 160 Ns/mm² or more, and particularly 200 Ns/mm² or more.

Preferred examples of the above-mentioned cement include normal, high early strength, ultrahigh early strength, moderate heat, or white Portland cements; and mixed Portland cements such as alumina cement, fly ash cement, blast furnace cement, and silica cement. With respect to the mixed amount and the unit quantity of water per m³ of concrete of the above-mentioned cement, for example, it is preferable for production of concrete with high durability and high strength that the unit quantity of water is 100 to 185 kg/m³ and the water/cement ratio is 10 to 70%. More preferably, the unit quantity of water is 120 to 275 kg/m³, and the water/cement ratio is 20 to 65%.

It is preferable that the above-mentioned cement additive is added to the cement composition such that the above-mentioned adduct (A), polycarboxylic acid polymer (B), and sulfonic acid compound (C) is 0.01% by weight or more and 10% by weight or less relative to 100% by weight of the total amount of the cement. If the total amount of the above-mentioned adduct (A), polycarboxylic acid polymer (B), and sulfonic acid compound (C) is less than 0.01% by weight, the cement additive may be insufficient in performances. If it is more than 10% by weight, the economic efficiency may decrease. The total amount of the above-mentioned adduct (A), polycarboxylic acid polymer (B), and sulfonic acid compound (C) is more preferably 0.05% by weight or more and 8% by weight or less, and still more preferably 0.1% by weight or more and 5% by weight or less. The above-mentioned values represented by "% by weight" are values on solids equivalent basis.

The above-mentioned cement additive may be used in combination with a conventionally used cement dispersant. The following compounds are preferably used as such a cement dispersant.

Polyol derivatives; aminosulfonates such as aminoarylsulfonic acid-phenol-formaldehyde condensate as described in Japanese Kokai Publication Hei-01-113419; a cement dispersant containing: a copolymer and/or its salt of a polyalkylene glycol mono(meth)acrylate compound and a (meth) acrylate compound, as a component (a) ; a copolymer and/or its hydrolyzed compound and/or its salt of a polyalkylene glycol mono(meth)allyl ether compound and maleic anhydride, as a component (b), and a copolymer and/or its salt of a polyalkylene glycol mono(meth)allyl ether compound and a maleate of a polyalkylene glycol compound, as a component (c), as described in Japanese Kokai Publication No. Hei-07-267705; a concrete admixture containing a copolymer of polyalkylene glycol ester of (meth)acrylic acid and (meth)acrylic acid (salt) as a component A; a specific polyethylene glycol polypropylene glycol compound as a component B; and a specific surfactant as a component C, as described in Japanese Patent No. 2508113; a copolymer containing polyethylene (propylene) glycol ester or polyethylene (propylene) glycol mono (meth) allyl ether of (meth)acrylic acid, (meth)allyl sulfonic acid (salt), and (meth)acrylic acid (salt), as described in Japanese Kokai Publication No. Sho-62-216950; a copolymer containing polyethylene (propylene) glycol ester of (meth)acrylic acid, (meth) allyl sulfonic acid (salt), and (meth) acrylic acid (salt)*,* as described in Japanese Kokai Publication No. Hei-01-226757; a copolymer containing polyethylene (propylene) glycol ester of (meth)acrylic acid, and (meth)allyl sulfonic acid (salt) or p-(meth)allyloxy benzene sulfonic acid (salt), and (meth)acrylic acid (salt) as described in Japanese Kokoku PublicationNo. Hei-05-36377; a copolymer of polyethylene glycol mono(meth)allyl ether and maleic acid (salt), as described in Japanese Kokai Publication No. Hei-04-149056; a copolymer of polyethylene glycol ester of (meth)acrylic acid, (meth)allyl sulfonic acid (salt), (meth)acrylic acid (salt), alkanediol mono(meth)acrylate, polyalkylene glycol mono(meth)acrylate, and an α,β-unsaturated monomer having an amide group in the molecule, as described in Japanese Kokai Publication No. Hei-05-170501; a copolymer of polyethylene glycol mono (meth) allyl ether, polyethyleneglycol mono (meth) acrylate, (meth) acrylic acid alkyl ester, (meth) acrylic acid (salt), and (meth)allyl sulfonic acid (salt) or p-(meth)allyl oxybenzene sulfonic acid (salt), as described in Japanese Kokai Publication No. Hei-06-191918; a copolymer of alkoxypolyalkylene glycol monoallyl ether and maleic anhydride, or its hydrolyte, or its salt, as described in Japanese Kokai Publication No. Hei-05-43288; a copolymer containing polyethylene glycol monoallyl ether, maleic acid, and a monomer copolymerizable with thesemonomers, or its salt, or its ester, as described in Japanese Kokai Publication No. Sho-58-38380;
a copolymer containing a polyalkylene glycol mono (meth) acrylate monomer, (meth) acrylic acid monomer, and a monomer copolymerizable with these monomers as described in Japanese Kokoku Publication No. Sho-59-18338; a copolymer containing (meth)acrylate having a sulfonic acid group and if necessary a monomer copolymerizable with this (meth) acrylate, or its salts, as described in Japanese Kokai Publication No. Sho-62-119147;an esterification reaction product of a copolymer of alkoxypolyalkylene glycol monoallyl ether and maleic anhydride, with a polyoxyalkylene derivative having an alkenyl group at the terminal, as described in Japanese Kokai Publication No. Hei-06-271347; an esterification reaction product of a copolymer of alkoxypolyalkylene glycol monoallyl ether and maleic anhydride, with a polyoxyalkylene derivative having an hydroxyl group at the terminal, as described in Japanese Kokai PublicationNo. Hei-06-298555; a copolymer containing an alkenyl ether monomer prepared by adding an ethylene oxide to a specific unsaturated alcohol such as 3-methyl-3-butene-1-ol, an unsaturated carboxylic acid monomer, and a monomer copolymerizable with these monomers, or polycarboxylic acid (salt) such as its salts, as described in Japanese Kokai Publication No. Sho-62-68806. These cement dispersants may be used singly or in combination of two or more species of them.

If the above-mentioned cement dispersant is used in combination, the mixing ratio by weight of the above-mentioned cement additive to the above-mentioned cement dispersant is 5 to 95: 95 to 5, although it depends on the kind of the cement dispersant to be used, the formulation, the test conditions, and the like. The mixing ratio is more preferably 10 to 90:90 to 10. The above-mentioned cement additive may be used in combination with another cement additive. Conventionally used cement additives (additive materials) mentioned below may be mentioned as the another cement additive.

### (1) Water-soluble polymers:

unsaturated carboxylic acid polymers such as polyacrylic acid (sodium), polymethacrylic acid (sodium), polymaleic acid (sodium), sodium salt of acrylic acid-maleic acid copolymer; polymers of polyoxyethylene or polyoxypropylene such as polyethylene glycol and polypropylene glycol, or copolymers thereof; nonionic cellulose ethers such as methylcellulose, ethylcellulose, hydroxymethylcellulose, hydroxyethylcellulose, carboxymethylcellulose, carboxyethylcellulose, and hydroxypropylcellulose; polysaccharides produced by microbial fermentation such as yeast glucan, xanthane gum, β-1,3 glucans (straight or branched chain, such as curdlan, paramylum, pachyman, scleroglucan, and laminaran); polyacrylamide; polyvinyl alcohol; starch; starch phosphate; sodium arginine; gelatin; and copolymer of acrylic acid containing an amino group in the molecule and quaternary compounds thereof.

### (2) Polymer emulsions:

copolymers of various vinyl monomers such as alkyl (meth) acrylates.

### (3) retarding agents:

oxycarboxylic acid and salts thereof, such as gluconic acid, glucoheptonic acid, arabonic acid, malic acid, citric acid, and inorganic salts thereof or organic or inorganic salts thereof such sodium salts thereof, potassium salts thereof, calcium salts thereof, magnesium salts thereof, ammonium salts thereof, and triethanolamine salts thereof; saccharides, for example, monosaccharides such as glucose, fructose, galactose, saccharose, xylose, apiose, ribose, and isomerized sugar, or oligosaccharides such as disaccharides and trisaccharides, or oligosaccharides such as dextrin, or polysaccharides such as dextran, or molasses containing these saccharides; sugar alcohols such as sorbitol; magnesium silicofluoride; phosphoric acid and salts thereof or borate esters thereof; amino carboxylates and salts thereof; alkali-soluble proteins; humic acid; tannic acid; phenol; polyalcohols such as glycerin; phosphonic acids and derivatives thereof, such as aminotri(methylene phosphonic acid), 1-hydroxyethylidene-1,1-diphosphonic acid, ethylenediamine tetra(methylene phosphonic acid), diethylenetriamine penta(methylene phosphonic acid), alkali metal salts thereof, and alkaline earth metal salts thereof.

### (4) Early strength agents and accelerators:

soluble calcium salts such as calcium chloride, calcium nitrite, calcium nitrate, calcium bromide, and calcium iodide; chlorides such as iron chloride and magnesium chloride; sulfates; potassium hydroxides; sodium hydroxides; carbonates; thiosulfates; formates such as formic acid and calcium formate; alkanolamine; alumina cement; and calcium aluminate silicate.

### (5) Mineral oil antifoaming agents:

lerosine and liquid paraffin

### (6) Fats and oils antifoaming agents:

animal and vegetable oils, sesame oil, castor oil, and alkylene oxide adducts thereof.

### (7) Fatty acid antifoaming agents:

oleic acid, stearic acid, alkylene oxide adducts thereof.

### (8) Fatty acid ester antifoaming agents:

glycerin monoricinolate, alkenyl succinic acid derivative, sorbitol monolaurate, sorbitol trioleate, and natural wax.

### (9) oxyalkylene antifoaming agents:

polyoxyalkylenes such as (poly)oxyethylene (poly)oxypropylene adduct; (poly)oxyalkyl ethers such as oxyethylene oxypropylene adducts in which diethylene glycol heptyl ether, polyoxyethylene oleyl ether, polyoxypropylene butyl ether, polyoxyethylene polyoxypropylene 2-ethylhexyl ether, or higher alcohols containing 12 to 14 carbon atoms is added; (poly)oxyalkylene (alkyl) aryl ethers such as polyoxypropylene phenyl ether, and polyoxyethylene nonylphenyl ether; acetylene ethers prepared by additionally polymerizing an alkylene oxide to an acetylene alcohol such as 2, 4, 7, 9-tetramethyl-5-decin-4, 7-diol, 2,5-dimethyl-3-hexyne-2, 5-diol, 3-methyl 1-butyne-3-ol; (poly)oxyalkylene fatty acid esters such as diethylene glycol oleate, diethylene glycol laurate, and ethylene glycol distearate; (poly)oxyalkylene sorbitan fatty acid esters such as polyoxyethylene sorbitan monolaurate, and polyoxyethylene sorbitan trioleate; (poly)oxyalkylene alkyl(aryl)ether sulfates such as polyoxypropylene methyl ether sodium sulfate, and polyoxyethylene dodecylphenol ether sodium sulfate; (poly)oxyalkylene alkyl phosphates such as (poly)oxyethylene stearyl phosphate; (poly)oxyalkylene alkylamines such as polyoxyethylene lauryl amine; and polyoxyalkylene amides.

### (10) Alcohol antifoaming agents:

octyl alcohol, hexadecyl alcohol, acetylene alcohol, and glycols.

### (11) Amide antifoaming agents:

polyamine acrylate.

### (12) Phosphate antifoaming agents:

tributyl phosphate, and sodium octyl phosphate.

### (13) Metal soap antifoaming agents:

aluminum stearate, and calcium oleate.

### (14) silicone antifoaming agents :

dimethyl silicone oil, silicone paste, silicone emulsion, organic modified polysiloxane (polyorganosiloxanes such as dimethylpolysiloxane), and fluorosilicone oil.

### (15) AE agents:

resin soap, saturated or unsaturated fatty acids, sodium hydroxy stearate, lauryl sulfate, ABS (alkylbenzene sulfonates) and LAS (linear alkylbenzene sulfonates), alkane sulfonates, polyoxyethylene alkyl(phenyl) ethers, polyoxyethylene alkyl (phenyl) ether sulfates or salts thereof, polyoxyethylene alkyl(phenyl) ether phosphates or salts thereof, protein materials, alkenyl sulfosuccinates, and α-olefin sulfonates.

### (16) Other surfactants:

polyalkylene oxide derivatives prepared by adding 10 mole or more of an alkylene oxide such as ethylene oxide and propylene oxide to: aliphatic monovalent alcohols containing 6 to 30 carbon atoms in the molecule such as octadecyl alcohol and stearyl alcohol; alicyclic monovalent alcohols containing 6 to 30 carbon atoms in the molecule such as abiethyl alcohol; monovalent mercaptans containing 6 to 30 carbon atoms in the molecule such as dodecyl mercaptan; alkylphenol containing 6 to 30 carbon atoms in the molecule such as nonyl phenol; amine containing 6 to 30 carbon atoms in the molecule such as dodecyl amine; or carboxylic acids containing 6 to 30 carbon atoms such as lauric acid and stearic acid; alkyl diphenyl ether sulfonates which may have an alkyl group or an alkoxyl group as a substituent and has ether-bonded two phenyl groups each containing a sulfonic group; various anionic surfactants; various cationic surfactants such as alkylamine acetates, and alkyl trimethyl ammonium chlorides; various nonionic surfactants; and various amphoteric surfactants.

### (17) Waterproofing agents:

fattyacid (salt), fatty acid ester, fats and oils, silicon, paraffin, asphalt, and wax.

### (18) Anticorrosives :

nitrite, phosphate, and zinc oxide.

### (19) Crack reduction agents:

polyoxyalkyl ethers; and alkane diols such as 2-methyl-2,4-pentanediol.

### (20) Expansive materials:

ettringite materials and coal materials.

Examples of other conventionally used cement additives (additive materials) include cement wetting agent, thickener, separation reducing agent, flocculant, drying shrinkage reduction agent, hardness improver, self-leveling agent, coloring agent, antifungal agent, blast furnace slag, fly ash, cinder ash, clinker ash, husk ash, silica fume, silica powder, and plaster. These cement additives (additive materials) may be used singly or in combination of two or more species of them.

The above-mentioned cement additive may be used in combination with a substance capable of improving the dispersibility, the foam inhibiting property and the like of the cement composition, in addition to the above-mentioned conventionally used cement dispersants or cement additives (additive materials).

As themethodof adding above-mentioned cement additive or the above-mentioned cement dispersant to the cement composition, preferred is a method of mixing these cement additives or cement dispersants to prepare a cement admixture, and thereby easily mixing this cement admixture with the cement composition.

The preferable embodiments of the present invention include an embodiment in which the above-mentioned alkylene oxide adduct containing a compound having 3 or more active hydrogens and an oxyalkylene group added to the compound is a polyalcohol alkylene oxide adduct.

The above-mentioned polyalcohol alkylene oxide adduct (also referred to as polyalcohol alkylene oxide adduct (A') or as adduct (A')) is described below. The "(A')" in above-mentioned adduct (A') is just a symbol for distinction between the adduct (A') and the generic concept. Hereinafter, descriptions regarding the content of a carboxyl group (including the salt form) in descriptions regarding the adduct (A') can be applied to the above-mentioned adduct (X) as the generic concept even if the above-mentioned (X) is not the polyalcohol alkylene oxide adduct (A').

The above-mentioned adduct (A') contains a group formed from one oxyalkylene group or a group formed by addition of two or more oxyalkylene groups (polyalkylene glycol chain). In the group formed by addition of two or more oxyalkylene groups, one or two or more species of oxyalkylene groups may form this group. If the group formed by addition of two or more oxyalkylene groups is formed from two or more species of oxyalkylene groups, these two or more species of oxyalkylene groups may added randomly, alternatively, or in block. If the adduct (A' ) has a plurality of the above-mentioned group formed from one or two or more oxyalkylene groups, these groups may be the same or different.

Examples of the oxyalkylene group include groups derived from compounds such as ethylene oxide (EO), propylene oxide (PO), isobutylene oxide, 1-butene oxide, 2-butene oxide, trimethylethylene oxide, tetramethylene oxide, tetramethylethylene oxide, butadiene monooxide, octylene oxide, styrene oxide, and 1,1-diphenylethylene oxide.

It is preferable that the group formed from an oxyalkylene group (oxyalkylene groups) is formed from an oxylethylene group (-O-CH₂-CH₂-) as a main component. In this case, the term "as a main component" means that an oxylethylene group occupies a large majority of the total oxyalkylene group if two or more species of oxyalkylene groups exist in the monomer. Thereby, the cement admixture has more improved hydrophilicity and thereby can exhibit the dispersibility more sufficiently. More preferably, the group formed from oxyalkylene groups essentially contains an oxypropylene group and an oxyethylene group. Still more preferably, the group has a block polymerization structure of an oxypropylene group and an oxyethylene group, so-called P-Q-P type block polymerization structure (P:oxyethylene group, Q: oxypropylene group), as mentioned below.

The polyalcohol which constitutes the polyalcohol residue in the above-mentioned polyalcohol alkylene oxide adduct means a compound having an average of 3 or more hydroxyl groups in one molecule. The specific embodiment is not especially limited. The above-mentioned polyalcohol is preferably composed of three atoms of carbon, hydrogen, and oxygen.

The average number of the hydroxyl groups in one molecule of the polyalcohol is not especially limited. The average number is preferably 3 to 300, and more preferably 4 to 100, and still more preferably 5 to 50, and particularly preferably 6 to 25. The polyalcohol alkylene oxide monomer can sufficiently exhibit the function as the monomer if the average number of the hydroxyl group in one molecule of the polyalcohol is within the above-mentioned ranges.

Specific examples of the above-mentioned polyalcohol include polyglycidol, glycerin, polyglycerin, trimethylolethane, trimethylol propane, 1,3,5-pentatriol, erythritol, pentaerythritol, dipentaerythritol, sorbitol, sorbitan, sorbitol glycerin condensate, adonitol, arabitol, xylitol, and mannitol. Also, the following compounds may be preferably used: saccharides, such as hexose such as glucose, fructose, mannose, indose, sorbose, gulose, talose, tagatose, galactose, allose, psicose, and altrose; saccharides, such as pentose such as arabinose, ribulose, ribose, xylose, xylulose, and lyxose; saccharides, such as tetroses such as threose, erythrulose, and erythrose; other saccharides such as rhamnose, cellobiose, maltose, isomaltose, trehalose, sucrose, raffinose, gentianose, and melezitose; sugar alcohols thereof and sugar acids thereof (saccharides: glucose, sugar alcohol: saccharin, sugar acid: gluconic acid). Partially etherified or esterified products of these compounds also may be preferably used. These polyalcohols may be used singly or in combination of two or more species of them. Among the above-mentioned polyalcohols, polyalcohols having a structure in which each of two adjacent carbon atoms is bonded to a hydroxyl group (for example, saccharides) are preferably used in the present invention. Sorbitol or polyglycerin is preferably used, and sorbitol is most preferably used.

It is preferable that the content of the carboxyl group (including salt forms) in the polyalcohol alkylene oxide adduct is 0.02 mole or less relative to 1 mole of the oxyalkylene group contained in the adduct because the performances as the cement dispersant are not inhibited if the content is within such a range. The content of the carboxyl group is more preferably 0.01 mole or less, and still more preferably 0.005 mole or less, and particularly preferably the adduct substantially contains no carboxyl group. Most preferably, the content of the carboxyl group is 0 mole.

In the above-mentioned oxyalkylene group, the oxyethylene group is preferably 50 to 100% by mole relative to 100% by mole of the total oxyalkylene group, if the oxyethylene group "as a main component" is represented by a value "% by mole" relative to 100% by mole of the total oxyalkylene group. If the content of the oxyethylene group is less than 50% by mole, the hydrophilicity of the group formed from the oxyalkylene group (s) may decrease. The content of the oxyethylene group is more preferably 60% mole or more, and still more preferably 70% by mole or more, and particularly preferably 80% by mole or more, and most preferably 90% by mole or more.

The average molar number of addition of the oxyalkylene group in the above-mentioned polyalcohol alkylene oxide adduct is preferably more than 0 and 500 mole or less relative to 1 mole of the hydroxyl group (-OH group). If the above-mentioned average molar number of addition is more than 500, the polymerizability of the monomer may decrease. The lower limit of the above-mentioned average molar number of addition is more preferably 1 or more, and still more preferably 2 or more, and particularly preferably 6 or more, and most preferably 12 or more. The upper limit of the above-mentioned average molar number of addition is more preferably 480 or less, and still more preferably 450 or less, and particularly preferably 420 or less, and most preferably 400 or less. If the average molar number of addition of the oxyalkylene group in the above-mentioned polyalcohol alkylene oxide adduct is out of the above-mentioned ranges, the functional effect of the polycarboxylic acid copolymer of improving the fluidity of the cement composition and the like may be insufficiently exhibited. The "average molar number of addition of the oxyalkylene group in the polyalcohol alkylene oxide adduct" is an average value of the molar number of the oxyalkylene group added to 1 mole of the group formed from oxyalkylene group (s) contained in the polyalcohol alkylene oxide adduct, or an average value of the molar number of the oxyalkylene group added to 1 mole of the hydroxyl group in the polyalcohol forming the polyalcohol alkylene oxide adduct. In the polyalcohol alkylene oxide adduct, it is preferable that at least one of the terminals of the oxyalkylene group having a structure of added to the polyalcohol residue is a hydroxyl group. More preferably, all of the terminals formed from the oxyalkyelene group are hydroxyl groups. The weight average molecular weight of the polyalcohol alkylene oxide adduct is not especially limited, and preferably 500 to 500000. The lower limit of the above-mentioned weight average molecular weight is more preferably 1000 or more, and still more preferably 5000 or more, and particularly preferably 8000 or more, and most preferably 10000 or more. The upper limit of the above-mentioned weight average molecular weight is more preferably 300000 or less, and still more preferably 200000 or less, and particularly preferably 100000 or less, and most preferably 80000 or less.

The preferable embodiments of the present invention include an embodiment in which the above-mentioned alkylene oxide adduct containing a compound having 3 or more active hydrogens and an oxyalkylene group added to the compound is a thioalcohol alkylene oxide adduct.

The above-mentioned thioalcohol alkylene oxide adduct (also referred to as thioalcohol alkylene oxide adduct (A") or as adduct (A")) is described below. The "(A")" in above-mentioned adduct (A") is just a symbol for distinction between the adduct (A") and the generic concept.

The above-mentioned thioalcohol means a compound having an average of 3 or more sulfanyl groups in one molecule. The specific embodiment is not especially limited. The above-mentioned thioalcohol is preferably composed of four atoms of carbon, hydrogen, oxygen, and sulfur. Thioglycolic acid derivatives such as trimethylol propane tristhioglycolate, and pentaerythritol tetrakisthioglycolate and/or mercaptopropionic acid derivatives such as trimethylol propane tristhiopropionate, and pentaerythritol tetraokisthiopropionate. One or two or more species of them may be used.

The above-mentioned adduct (A") has an average of 3 or more sulfanyl groups in one molecule, and thereby an oxyalkylene group can be added as in the above-mentioned adduct (A'). Therefore, the above-mentioned adduct (A") can exhibit the effects of the present invention like the above-mentioned adduct (A'). From the same reason, the above-mentioned descriptions regarding the adduct (A') can be applied as preferable embodiments of the above-mentioned adduct (A"). If the descriptions regarding the adduct (A') are applied to the adduct (A''), the polyalcohol is replaced with the thiolalcohol, and the hydroxyl group is replaced with the sulfanyl group. Thereby, the descriptions can be appropriately applied to the adduct (A'').

As the above-mentioned adduct (X), one or two or more species of the above-mentioned adduct (A), the above-mentioned adduct (A'), and/or the above-mentioned adduct (A'').

The cement admixture of the present invention can preferably used in various cement compositions and the like and can provide a cement composition having an appropriate viscosity for easier handling at the place where the composition is handled. Therefore, if the cement admixture of the present invention is used in the cement composition, the water-reducing performance of the cement composition is improved and thereby a hardened product of the composition has excellent strength anddurabili ty. In addition, the cement composition has a viscosity enough for easy operation at the place where the cement composition is handled, and therefore, the operation efficiency in construction sites of civil engineering and building construction can be improved.

The cement admixture of the present invention has the above-mentioned configuration. Therefore, the cement admixture can enhance slump maintaining capability; maintain fluidity; and provide a cement composition and the like having an appropriate viscosity for handling at the place where the composition and the like is handled.

### BEST MODE FOR CARRYING OUT THE INVENTION

The present invention is described in more detail below with reference to Examples, but the present invention is not limited to only these Examples. The terms, "part (s) " and "%" represent "part (s) by weight" and "% by weight", respectively, unless otherwise specified.

### Example 1

### Production Example of intermediate (a)

Into a pressurized container equipped with a stirrer, a manometer, and a thermometer were charged commercially available polyethyleneimine (number average molecular weight 600: addition number of ethyleneimine 14) 614 g and sodium hydride 4 g. Under stirring, air inside the container was substituted with nitrogen enough, and then the temperature was raised to 150°C. Then, ethylene oxide 1886 g (the average molar number of addition to polyethyleneimine active hydrogen: 3mole) was slowly added into the mixture to allow the reaction to proceed. After the total amount of the ethylene oxide was added, the mixture was matured for 30 minutes at the same temperature. Thereby, a polyalkyleneimine alkylene oxide compound 2500 g was produced. This compound was defined as an intermediate (a).

### Production Example of intermediate (b)

Into a pressurized container equipped with a stirrer, a manometer, and a thermometer was charged the intermediate (a) 474 g. Under stirring, air inside the container was substituted with nitrogen enough, and then the temperature was raised to 150°C. Then, ethylene oxide 2026 g (the average molar number of addition to polyethyleneimine active hydrogen: 20 mole) was slowly added into the mixture to allow the reaction to proceed. After the total amount of the ethylene oxide was added, the mixture was matured for 30 minutes at the same temperature. Thereby, a polyalkyleneimine alkylene oxide compound 2500 g was produced. This compound was defined as an intermediate (b).

Further, into a pressurized container equipped with a stirrer, a manometer, and a thermometer was charged the intermediate (b) 473 g. Under stirring, air inside the container was substituted with nitrogen enough, and then the temperature was raised to 150°C. Then, ethylene oxide 2028 g (the average molar number of addition to polyethyleneimine active hydrogen: 110 mole) was slowly added into the mixture to allow the reaction to proceed. After the total amount of the ethylene oxide was added, the mixture was matured for 30 minutes at the same temperature. Thereby, a polyalkyleneimine alkylene oxide compound 2500 g was produced. This compound was defined as "P14-110".

### Production Example 2

Into a pressurized container equipped with a stirrer, a manometer, and a thermometer was charged 2334 g of the "P14-110" produced in Production Example 1. Under stirring, air inside the container was substituted with nitrogen enough, and then the temperature was raised to 130°C. Then, propylene oxide 166 g (the average molar number of addition to polyethyleneimine active hydrogen: 6 mole) was slowly added into the mixture to allow the reaction to proceed. After the total amount of the propylene oxide was added, the mixture was matured for 5 hours at the same temperature. Thereby, a polyalkyleneimine alkylene oxide compound 2500 g was produced. This compound was defined as "P14-110-006".

### Production Examples 3 to 7 and 30 to 36

Polyalkyleneimine alkylene oxide adducts shown in Table 1 were produced in the same manner as in Production Example 1 or 2, except that the average molar number of addition of ethyleneimine, alkylene oxide or the like was changed as shown in Table 1. In Table 1, "EIn" represents an average number of addition of ethyleneimine; "en1" and "en2" each represent an average number of addition of ethylene oxide to polyethyleneimine active hydrogen; and "pn" represents an average number of addition of propylene oxide to polyethyleneimine active hydrogen. Polyethyleneimines having a molecular weight equivalent to that shown in EIn of Table 1 were used. In Table 1, "PO% by weight" represents a value "% by weight" of propylene oxide relative to 100% by weight of alkylene oxides.

### Production Example 8

### Production Example of intermediate (c)

Into a pressurized container equipped with a stirrer, a manometer, and a thermometer was charged 312 g of the intermediate (a) produced in Production Example 1. Under stirring, air inside the container was substituted with nitrogen enough, and then the temperature was raised to 130°C. Then, propylene oxide 620 g (the molar number of addition to polyethyleneimine active hydrogen: 6 mole) was slowly added into the mixture to allow the reaction to proceed. After the total amount of the ethylene oxide was added, the mixture was matured for 5 hours at the same temperature. Then, the temperature was raised to 150°C, and ethylene oxide 1568 g (the average molar number of addition to polyethyleneimine active hydrogen: 20 mole) was slowly added into the mixture to allow the reaction to proceed. After the total amount of the ethylene oxide was added, the mixture was matured for 30 minutes at the same temperature. Thereby, a polyalkyleneimine alkylene oxide compound 2500 g was produced. This compound was defined as an intermediate (c).

Further, into a pressurized container equipped with a stirrer, a manometer, and a thermometer was charged the intermediate (c) 464 g. Under stirring, air inside the container was substituted with nitrogen enough, and then the temperature was raised to 150°C. Then, ethylene oxide 2036 g (the average molar number of addition to polyethyleneimine active hydrogen: 90 mole) was slowly added into the mixture to allow the reaction to proceed. After the total amount of the ethylene oxide was added, the mixture was matured for 30 minutes at the same temperature. Thereby, a polyalkyleneimine alkylene oxide compound 2500 g was produced. This compound was defined as "P14-003-006-160".

### Production Example 7 and 9 to 21

Polyalkyleneimine alkylene oxide adducts shown in Table 1 were produced in the same manner as in Production Example 1, 2, or 8, except that the average molar number of addition of the ethyleneimine, alkylene oxide or the like was changed as shown in Table 1. In Table 1, "EIn" represents an average number of addition of ethyleneimine; "en1" and "en2" each represent an average number of addition of ethylene oxide to polyethyleneimine active hydrogen; and "pn" represents an average number of addition of propylene oxide to polyethyleneimine active hydrogen. Polyethyleneimines having a molecular weight equivalent to that shown in EIn of Table 1 were used. In Table 1, "PO% by weight" represents a value "% by weight" of propylene oxide relative to 100% by weight of alkylene oxides.

### Production Example 22

Into a pressurized container equipped with a stirrer, a manometer, and a thermometer was charged 2390 g of the "P14-003-006-160" produced in Production Example 8. Under stirring, air inside the container was substituted with nitrogen enough, and then the temperature was raised to 130°C. Then, propylene oxide 110 g (the average molar number of addition to polyethyleneimine active hydrogen: 6 mole) was slowly added into the mixture to allow the reaction to proceed. After the total amount of the propylene oxide was added, the mixture was matured for 5 hours at the same temperature. Thereby, a polyalkyleneimine alkylene oxide compound 2500 g was produced. This compound was defined as "P14-003-006-160-006".

### Production Example 28

Into a pressurized container equipped with a stirrer, a manometer, and a thermometer was charged 1323 g of the "P14-003-006-160" produced in Production Example 8. Under stirring, air inside the container was substituted with nitrogen enough, and then the temperature was raised to 130°C. Then, ethylene oxide 1177 g (the average molar number of addition to polyethyleneimine active hydrogen: 160 mole) was slowly added into the mixture to allow the reaction to proceed. After the total amount of the ethylene oxide was added, the mixture was matured for 30 minutes at the same temperature. Thereby, a polyalkyleneimine alkylene oxide compound 2500 g was produced. This compound was defined as "P14-003-006-160-006-160".

### Production Examples 23 to 27 and 29

Polyalkyleneimine alkylene oxide adducts shown in Table 1 were produced in the same manner as in Production Example 1, 2, 8, 22, or 28, except that the average molar number of addition of the ethyleneimine, alkylene oxide or the like was changed as shown in Table 1. In Table 1, "EIn" represents an average number of addition of ethyleneimine; "en1" and "en2" each represent an average number of addition of ethylene oxide to polyethyleneimine active hydrogen; and "pn" represents an average number of addition of propylene oxide to polyethyleneimine active hydrogen. Polyethyleneimines having a molecular weight equivalent to that shown in EIn of Table 1 were used. In Table 1, "PO% by weight" represents a value "% by weight" of propylene oxide relative to 100% by weight of alkylene oxides.

### Production Example 39

Into a pressurized container equipped with a stirrer, a manometer, and a thermometer was charged the intermediate (b) 207 g. Under stirring, air inside the container was substituted with nitrogen enough, and then the temperature was raised to 130°C. Then, a mixed solution 2293 g of ethylene oxide 989 g and propylene oxide 1304 g (the average molar number of addition to polyethyleneimine active hydrogen: 200 mole) was slowly added into the mixture to allow the reaction to proceed. After the total amount of the mixed solution was added, the mixture was matured for 5 hours at the same temperature. Thereby, a polyalkyleneimine alkylene oxide compound 2500 g was produced. This compound was defined as "P14-020-(100+100)".

### Production Examples 37 and 38, and 40 to 42

Polyalkyleneimine alkylene oxide adducts shown in Table 1 were produced in the same manner as in Production Example 1, 2, 8, 22, 28, or 39, except that the average molar number of addition of the ethyleneimine, alkylene oxide or the like was changed as shown in Table 1. In the following Tables 1 and 2, "EIn" represents an average number of addition of ethyleneimine; "en1" and "en2" each represent an average number of addition of ethylene oxide to polyethyleneimine active hydrogen; and "pn" represents an average number of addition of propylene oxide to polyethyleneimine active hydrogen. Polyethyleneimines having a molecular weight equivalent to that shown in EIn of Table 1 were used. In Table 1, "PO% by weight" represents a value "% by weight" of propylene oxide relative to 100% by weight of alkylene oxides.

**[Table 1]**

| | Adduct(X) | Eln | en1 | pn1 | en2 | pn2 | en3 | Total molecular number | PO % by weight |
|---|---|---|---|---|---|---|---|---|---|
| Production Example 1 | P14-110 | 14 | 110 | 0 | 0 | 0 | 0 | 110 | 0.00 |
| Production Example | 2 P14-110-006 | 14 | 110 | 6 | 0 | 0 | 0 | 116 | 6.71 |
| Production Example | 3 P14-110-020 | 14 | 110 | 20 | 0 | 0 | 0 | 130 | 19.34 |
| Production Example | 4 P14-110-080 | 14 | 110 | 80 | 0 | 0 | 0 | 190 | 48.95 |
| Production Example 5 | P14-250 | 14 | 250 | 0 | 0 | 0 | 0 | 250 | 0.00 |
| Production Example | 6 P14-500 | 14 | 500 | 0 | 0 | 0 | 0 | 500 | 0.00 |
| Production Example 7 | P14-003-006-100 | 14 | 3 | 6 | 100 | 0 | 0 | 109 | 7.13 |
| Production Example 8 | P14-003-006-160 | 14 | 3 | 6 | 160 | 0 | 0 | 169 | 4.63 |
| Production Example 9 | P14-003-006-250 | 14 | 3 | 6 | 250 | 0 | 0 | 259 | 3.03 |
| Production Example 10 | P14-003-006-500 | 14 | 3 | 6 | 500 | 0 | 0 | 509 | 1.55 |
| Production Example 11 | P14-080-006-080 | 14 | 80 | 6 | 80 | 0 | 0 | 166 | 4.71 |
| Production Example 12 | P14-080-040-080 | 14 | 80 | 40 | 80 | 0 | 0 | 200 | 24.79 |
| Production Example 13 | P14-040-040-040 | 14 | 40 | 40 | 40 | 0 | 0 | 120 | 39.73 |
| Production Example 14 | P14-110-040-110 | 14 | 110 | 40 | 110 | 0 | 0 | 260 | 19.34 |
| Production Example 15 | P14-000-006-160 | 14 | 0 | 6 | 160 | 0 | 0 | 166 | 4.71 |
| Production Example 16 | P14-160-006 | 14 | 160 | 6 | 0 | 0 | 0 | 166 | 4.71 |
| Production Example 17 | P14-003-012-160 | 14 | 3 | 12 | 160 | 0 | 0 | 175 | 8.85 |
| Production Example 18 | P14-003-050-160 | 14 | 3 | 50 | 160 | 0 | 0 | 213 | 28.80 |
| Production Example 19 | P14-160-100-003 | 14 | 160 | 100 | 3 | 0 | 0 | 263 | 44.72 |
| Production Example 20 | P14-110-100-003 | 14 | 110 | 100 | 3 | 0 | 0 | 213 | 53.85 |
| Production Example 21 | P14-020-100-003 | 14 | 20 | 100 | 3 | 0 | 0 | 123 | 85.15 |
| Production Example 22 | P14-003-006-160-006 | 14 | 3 | 6 | 160 | 6 | 0 | 175 | 8.85 |
| Production Example 23 | P14-003-006-160-020 | 14 | 3 | 6 | 160 | 20 | 0 | 189 | 17.38 |
| Production Example 24 | P14-003-006-017-006-080 | 14 | 3 | 6 | 17 | 6 | 80 | 112 | 13.66 |
| Production Example 25 | P14-003-006-017-020-080 | 14 | 3 | 6 | 17 | 20 | 80 | 126 | 25.53 |
| Production Example 26 | P14-003-006-080-006-080 | 14 | 3 | 6 | 80 | 6 | 80 | 175 | 8.85 |
| Production Example 27 | P14-003-006-080-050-080 | 14 | 3 | 6 | 80 | 50 | 80 | 219 | 31.18 |
| Production Example 28 | P14-003-006-160-006-160 | 14 | 3 | 6 | 160 | 6 | 160 | 335 | 4.67 |
| Production Example 29 | P14-003-006-160-050-160 | 14 | 3 | 6 | 160 | 50 | 80 | 299 | 23.30 |
| Production Example 30 | P03-003-006-160 | 3 | 3 | 6 | 160 | 0 | 0 | 169 | 4.63 |
| Production Example 31 | P03-300-006-003 | 3 | 300 | 6 | 3 | 0 | 0 | 309 | 2.54 |
| Production Example 32 | P03-300-080-003 | 3 | 300 | 80 | 3 | 0 | 0 | 383 | 25.82 |
| Production Example 33 | P42-003-006-110 | 42 | 3 | 6 | 110 | 0 | 0 | 119 | 6.54 |
| Production Example 34 | P42-050-006-050 | 42 | 50 | 6 | 50 | 0 | 0 | 106 | 7.33 |
| Production Example 35 | P42-110-040-003 | 42 | 110 | 40 | 3 | 0 | 0 | 153 | 31.82 |
| Production Example 36 | P42-020-050-020 | 42 | 20 | 50 | 20 | 0 | 0 | 90 | 62.24 |

**[Table 2]**

| | Adduct (X) | Eln | en1 | pn1 | en2 | Total molecular number | PO % by weight |
|---|---|---|---|---|---|---|---|
| Production Example 37 | P14-(110+020)-000 | 14 | (110+20) | | 0 | 130 | 19.34 |
| Production Example 38 | P14-003-(006+160) | 14 | 3 | (6+160) | | 169 | 4.63 |
| Production Example 39 | P14-020-(100+100) | 14 | 20 | (100+100) | | 220 | 52.35 |
| Production Example 40 | P14-(040+040)-030 | 14 | (40+40) | | 30 | 110 | 42.97 |
| Production Example 41 | P14-(050+010)-050 | 14 | (50+10) | | 50 | 110 | 11.65 |
| Production Example 42 | P14-050-(010+050) | 14 | 50 | (10+50) | | 110 | 11.65 |

In Tables 1 and 2, "( )" represents a random polymer prepared by mixing ethylene oxide with propylene oxide at a ratio of value described inside "( )" and thereby adding the mixture to each other. For example, "(100+100)" described in Production Example 39 means that a random polymer prepared by mixing ethylene oxide equivalent to 100 mole with propylene oxide equivalent to 100 mole and thereby adding to each other.

### Production Example 43

### Production of intermediate (d)

Into a pressurized container equipped with a stirrer, a manometer, and a thermometer were charged isoprenol 409 g and sodium hydroxide 0.6g. After enough substitution with nitrogen, the temperature was raised to 130°C under stirring. Then, ethylene oxide 2091 g (the average molar number of addition: 10 mole) was slowly added into the mixture to allow the reaction to proceed. After the total amount of the ethylene oxide was added, the mixture was matured for 30 minutes at the same temperature. Thereby, an isoprenol ethylene oxide compound 2500 g was produced. This compound was defined as "intermediate (d)".

### Production Example 44

### Production of IPN-50

Into a pressurized container equipped with a stirrer, a manometer, and a thermometer was charged 575 g of the intermediate (d) produced in Production Example 43. After enough substitution with nitrogen, the temperature was raised to 130°C under stirring. Then, ethylene oxide 1925 g (the average molar number of addition: 40 mole) was slowly added into the mixture to allow the reaction to proceed. After the total amount of the ethylene oxide was added, the mixture was matured for 30 minutes at the same temperature. Thereby, an isoprenol ethylene oxide compound 2500 g was produced. This compound was defined as "IPN-50".

### Production Example 45

Into a reaction container equipped with a thermometer, a stirrer, a dropping device, a nitrogen inlet tube, and a cooling tube were charged 1262 g of IPN-50 produced in Production Example 44, and water 746 g. Under stirring in nitrogen atmosphere, the temperature was heated to 58°C. Then, 30% hydrogen peroxide solution 3.7 g was added into the mixture. Thereto, a mixed solution 253.7 g of acrylic acid 78.4 g and distilled water 175.3 g, and a mixed solution 232.5 g of L-ascorbic acid 1.4 g, 3-mercaptopropionic acid 3.5 g, and distilled water 227 . 6 g were added dropwise over 3 hours and 3.5 hours, respectively. The mixture was stirred for 1 hour while keeping the temperature to 58°C. Then, the polymerization reaction was completed. After cooling, the reaction mixture was adjusted to pH 7 by adding sodium hydroxide aqueous solution thereto. Thereby, an aqueous solution of a polymer (1) containing 92.5% by weight of the IPN-50 was produced. Table 3 shows the formulation and the weight average molecular weight of the polymer (1).

### Production Example 46

### Production of esterified product (a)

Into a reaction container equipped with a thermometer, a stirrer, a nitrogen inlet tube, and a condensation water-separation tube were charged polyethylene glycol monomethyl ether (n=25) 2033 g, methacrylic acid 400 g, paratoluene sulfonic acid monohydrate 54 g, phenothiazine 0.5 g and, as an azeotropy solvent, cyclohexane 243 g. The mixture was heated for 20 hours and thereby the esterification was performed while the temperature was maintained to 115°C and condensation water was separated. Distilled water 509 g and 30% aqueous solution of sodium hydroxide 42 g were added into the reaction mixture at an esterification rate (conversion rate of polyethylene glycol monomethyl ether). Then, the temperature was raised again, and the cyclohexane was removed through azeotropy, and thereto distilled water was added. Thereby, an aqueous solution of a mixture containing 70% of the esterified product (a) and 10% of residual methacrylic acid was produced.

### Production Example 47

Into a reaction container equipped with a thermometer, a stirrer, a dropping device, a nitrogen inlet tube, and a cooling tube, were charged distilled water 50 g. Under stirring in nitrogen atmosphere, the temperature was heated to 80°C. Thereto, an aqueous solution 215.9 g of the mixture of the esterified product (a) and the methacrylic acid produced in Production Example 46, methacrylic acid 12.8 g, distilled water 69.8 g, and 3-mercaptopropionic acid 1.5 g were added dropwise over 4 hours and a mixture solution of distilled water 47.9 g and ammonium persulfate 2.1 g was added dropwise 5 hours. Then, the mixture was matured for 1 hour while the temperature was kept to 80°C, and then the mixture was cooled. The mixture was adjusted to pH 7 by adding 30% aqueous solution of sodiumhydroxide thereto. Further, distilled water was added thereto, and thereby a polymer (2) in which 80% by weight of the polymer was derived from the esterified product (a) was produced. Table 3 shows the formulation and the weight average molecular weight of the polymer (2).

### Production Example 48

### Production of H-(OC2H4)13-(OC3H6)2-(OC2H4)10-OCH3

Into a reaction container equipped with a thermometer, a stirrer, a raw material inlet tube, and a nitrogen inlet tube, was charged polyethylene glycol monomethyl ether (n=10) 1100 g and potassium hydroxide 0 . 5 g. Then, air inside the container was substituted with nitrogen and the temperature was heated to 120°C. While this temperature was kept, propylene oxide 235 g was charged into the mixture over 3 hours. After the charge, the mixture was matured for 2 hour at 120°C. Air inside the container was again substituted with nitrogen, and then ethylene oxide 1165 g was charged into the container over 3 hours while the temperature was kept to 120°C. After the charge, the mixture was matured for 1 hour at 120°C. Thereby, alkylene glycol monomethyl ether with a hydroxyl value of 48 mg-KOH/g was obtained.

### Production Example 49

### Production of esterified product (b)

Into a reaction container equipped with a thermometer, a stirrer, a nitrogen inlet tube, and a condensation water separation tube, were charged 2083 g of the polyalkylene glycol monomethyl ether produced in Production Example 48, methacrylic acid 350 g, paratoluenesulfonic acid monohydrate 54 g, phenothiazine 0.5g, and as an azeotropic solvent, cyclohexane 243g. The mixture was heated for 28 hours and thereby esterification was performed while the temperature was maintained to 115°C and condensation water was separated. Distilled water 510 g and 30% aqueous solution of sodium hydroxide 41 g were added into the reaction mixture at an esterification rate (conversion rate of polyethylene glycol monomethyl ether) 99%. Then, the temperature was raised again, and the cyclohexane was removed through azeotropy, and thereto distilled water was added. Thereby, an aqueous solution of a mixture containing 72% of the esterified product (b) and 8% of residual methacrylic acid was produced.

### Production Example 50

Into a reaction container equipped with a thermometer, a stirrer, a dropping device, a nitrogen inlet tube, and a cooling tube, was charged distilled water 50 g. Under stirring in nitrogen atmosphere, the temperature was raised to 80°C. Thereto, a mixed solution of the mixed aqueous solution of the esterified product (b) and the methacrylic acid 200.0 g, methacrylic acid 25.2 g, distilled water 71.3 g, and 3-mercaptopropionic acid 3.5 g was added dropwise over 4 hours and a mixed solution of distilled water 47.9 g and ammonium persulfate 2.1 g was added dropwise over 5 hours. Then, the mixture was matured for 1 hour while the temperature was kept to 80°C, and then the mixture was cooled. The mixture was adjusted to pH 7 by adding 30% aqueous solution of sodiumhydroxide thereto. Further, distilled water was added thereto, and thereby a polymer (3) in which 75% by weight of the polymer was derived from the esterified product (a) was produced. Table 3 shows the formulation and the weight average molecular weight of the polymer (3).

**[Table 3]**

| Polymer (B) | Formulation (ratio by weight) | Molecular weight |
|---|---|---|
| (1) | IPN-50/SA=92.5/7.5 | 40000 |
| (2) | PGM-25E/SMAA=80/20 | 25000 |
| (3) | PGM -10E2P13E/SMAA=75/25 | 14000 |

In Table 3, "SA" represents sodium acrylate; "SMMA" represents sodium methacrylate; "PGM-10E2P13E" represents the esterified product (a); and "PGM-25E" represents the esterified product (b).

### Examples 1 to 46 and Comparative Examples 1 to 6

### (Mortar test method)

Using cement admixtures prepared by mixing the components shown in Table 1 to 3, in combinations and at mixing amounts each shown in Table 4, mortar tests were performed under mixing conditions shown in Table 5. That is, the cement (C), the fine aggregate (S1), and the fine aggregate (S2) were charged into a mortar mixer and was dry-mixed for 10 seconds at a low speed. Then, mixing water (W) containing the cement admixture and the air content-adjusting agent was added into the mixture and kneaded for 60 seconds at a low speed. The kneading was stopped and then the mortar adhering to the wall surface of the mixer was scraped over 30 seconds. Then, the mixture was further kneaded for 90 seconds at a high speed. Thereby, mortar was produced. Thus-produced mortar was charged into a minislump cone and the cone was raised in the vertical direction and the slump value immediately after the kneading was measured. Similarly, the slump value 60 minutes later was measured and the slump maintaining capacity was evaluated based on the slump loss rate to the slump value immediately after the kneading. The mini-slump cone having an inner diameter of the upper end of 50 mm, an inner diameter of the lower end of 100 mm, and a height of 150 mm, was used. The use amount of the cement admixture was adjusted such that the mortar slump value immediately after the kneading showed 8 to 10 cm. The use amount of the air content-adjusting agent was adjusted such that the air content showed 3 to 5%. With respect to the slump maintaining capability, the mortar showing less than 30% of the slump loss rate 60 minutes later was represented by "Good", and the mortar showing 30% or more of the slump loss rate 60 minutes later was represented by "Poor". Table 4 shows the evaluation results. The slump loss rate (%) is expressed by a value calculated by subtracting the slump value 60 minutes later from the slump value immediately after the kneading, and diving the obtained value by the slump value immediately after the kneading and multiplying the Value by 100.

**[Table 4]**

| W/C (% by weight) | S/C | Mortar formulation (g) | | | |
|---|---|---|---|---|---|
| | | Water (W) | Cement(C) | Fine aggregate (S1) | Fine aggregate (S2) |
| 53 | 2.7 | 377 | 709 | 1350 | 540 |

The usedmaterials in Table 4 show the following materials, respectively.
Cement (C) : Ordinary Portland cement (product of TAIHEIYO CEMENT Corp.)
Fine aggregate (S1): Standard sand for cement strength examination <JIS R 5201>
Fine aggregate (S2): Toyoura standard sand
Air content-adjusting agent: MA404 <antifoaming agent, product of Pozzolith Bussan Co, Ltd.>
MA303A <AE agent, product of Pozzolith Bussan Co, Ltd.>

**[Table 5]**

| | Component of concrete admixture | | Mix ratio | Mortar test result |
|---|---|---|---|---|
| | Adduct (X) | Copolymer (B) | (X)/(B) <% by weight> | Maintaining capacity |
| Example 1 | P14-110 | Copolymer (1) | 50/50 | Good |
| Example 2 | P14-110-006 | Copolymer (1) | 50/50 | Good |
| Example 3 | P14-110-020 | Copolymer(1) | 50/50 | Good |
| Example 4 | P14-110-080 | Copolymer(1) | 50/50 | Good |
| Example 5 | P14-250 | Copolymer(1) | 50/50 | Good |
| Example 6 | P14-500 | Gopolymer(1) | 50/50 | Good |
| Example 7 | P14-003-006-100 | Copolymer(1) | 50/50 | Good |
| Example 8 | P14-003-006-160 | Copolymer(1) | 50/50 | Good |
| Example 9 | P14-003-006-250 | Copolymer(1) | 50/50 | Good |
| Example 10 | P14-003-006-500 | Copolymer(1) | 50/50 | Good |
| Example 11 | P14-080-006-080 | Copolymer(1) | 50/50 | Good |
| Example 12 | P14-080-040-080 | Copolymer(1) | 50/50 | Good |
| Example 13 | P14-040-040-040 | Copolymer(1) | 50/50 | Good |
| Example 14 | P14-110-040-110 | Copolymer(1) | 50/50 | Good |
| Example 15 | P14-000-006-163 | Copolymer(1) | 50/50 | Good |
| Example 16 | P14-160-006 | Copolymer(1) | 50/50 | Good |
| Example 17 | P14-003-012-160 | Copolymer(1) | 50/50 | Good |
| Example 18 | P14-003-050-160 | Copolymer(1) | 50/50 | Good |
| Example 19 | P14-160-100-003 | Copolymer(1) | 50/50 | Good |
| Example 20 | P14-110-100-003 | Copolymer(1) | 50/50 | Good |
| Example 21 | P14-020-100-003 | Copolymer(1) | 50/50 | Good |
| Example 22 | P14-003-006-160-006 | Copolymer(1) | 50/50 | Good |
| Example 23 | P14-003-006-160-020 | Copolymer(1) | 50/50 | Good |
| Example 24 | P14-003-006-017-006-080 | Copolymer(1) | 50/50 | Good |
| Example 25 | P14-003-006-017-020-080 | Copolymer(1) | 50/50 | Good |
| Example 26 | P14-003-006-080-006-080 | Copolymer(1) | 50/50 | Good |
| Example 27 | P14-003-006-080-050-080 | Copolymer(1) | 50/50 | Good |
| Example 28 | P14-003-006-160-006-160 | Copolymer(1) | 50/50 | Good |
| Example 29 | P14-003-006-160-050-160 | Copolymer(1) | 50/50 | Good |
| Example 30 | P03-003-006-160 | Copolymer(1) | 50/50 | Good |
| Example 31 | P03-300-006-003 | Copolymer(1) | 50/50 | Good |
| Example 32 | P03-300-080-003 | Copolymer(1) | 50/50 | Good |
| Example 33 | P42-003-006-110 | Copolymer(1) | 50/50 | Good |
| Example 34 | P42-050-006-050 | Copolymer(1) | 50/50 | Good |
| Example 35 | P42-110-040-003 | Copolymer(1) | 50/50 | Good |
| Example 36 | P42-020-050-020 | Copolymer(1) | 50/50 | Good |
| Example37 | P14-(110+020)-000 | Copolymer(1) | 50/50 | Good |
| Example 38 | P14-003-(006+160) | Copolymer(1) | 50/50 | Good |
| Example 39 | P14-020-(100+100) | Copolymer(1) | 50/50 | Good |
| Example 40 | P14-(040+040)-030 | Copolymer(1) | 50/50 | Good |
| Example 41 | P14-(050+010)-050 | Copolymer(1) | 50/50 | Good |
| Example 42 | P14-050-(010+050) | Copolymer(1) | 50/50 | Good |
| Example 43 | P14-003-006-160 | Copolymer (2) | 50/50 | Good |
| Example 44 | P14-003-006-160 | Copolymer (3) | 50/50 | Good |
| Example 45 | P14-003-012-160 | Copolymer (2) | 50/50 | Good |
| Example 46 | P94-003-012-160 | Copolymer (3) | 50/50 | Good |
| Comparative Example 1 | - | Copolymer(1) | 100/0 | Poor |
| Comparative Example 2 | - | Copolymer (2) | 100/0 | Poor |
| Comparative Example 3 | - | Copolymer (3) | 100/0 | Poor |
| Comparative Example 4 | Intermediate (b) | Copolymer(1) | 50/50 | Poor |
| Comparative Example 5 | Intermediate (b) | Copolymer (2) | 50/50 | Poor |
| Comparative Example 6 | Intermediate (b) | Copolymer (3) | 50/50 | Poor |

As shown in Table 5, the mortars prepared by using the cement admixtures containing both of the polyalkyleneimine alkylene oxide adduct (A) and the polymer (B) each show more excellent slump maintaining capability than that of the mortar prepared by using only the polymer (B) as the cement admixture, which is a comparative example.

### Examples 47 to 50 and Comparative Examples 7 to 10

### (Concrete test method)

Using cement admixtures prepared by mixing the components shown in Table 1 to 3, in combinations and at mixing amounts shown in Table 7, concrete tests were performed under mixing conditions shown in Table 6. That is, the cement (C), the fine aggregate (S), and the coarse aggregate (G) were charged into a 100L-forced pan type mixer and the mixture was dry-mixed for 10 seconds. Then, mixing water (W) containing the cement admixture and the air content-adjusting agent was added into the mixture and kneaded. Thereby, concrete was produced. The produced concrete was measured for slum values immediately after the kneading, 15 minutes later, and 30 minutes later according to JIS A 1101. Then, the slump loss capability was evaluated based on the slump loss rate to the slump value immediately after the kneading. The use amount of the cement admixture was adjusted such that the slump value immediately after the kneading showed 8 to 10 cm. The use amount of the air content-adjusting agent was adjusted such that the air content showed 3 to 5%. With respect to the slump maintainingcapability, the concrete showing less than 30% of the slump loss rate 60 minutes later was represented by "Good", and the concrete showing 30% or more of the slump loss rate 60 minutes later was represented by "Poor". Table 7 shows the evaluation results. The slump loss rate was calculated as mentioned above.

**[Table 6]**

| W/C (% by weight) | Fine aggregate ratio (% by volume) | Concrete formulation (kg/m3) | | | | |
|---|---|---|---|---|---|---|
| | | Air | Water(W) | Cement(C) | Coarse aggregate(G) | Fine aggregate(S2) |
| 55 | 48 | 45 | 170 | 309 | 949 | 850 |

The used materials in Table 6 show the followingmaterials, respectively.
Cement (C): Three kinds-mixed ordinary Portland cement (products of TAIHEIYO CEMENT CORP., SUMITOMO OSAKA CEMENT CO., LTD., and UBE-MITSUBISHI CEMENT CORP.>
Coarse aggregate (G): Ome hard rubble, density of 2.65
Fine aggregate (S2): mountain sand of Chiba, density of 2.59, FM value of 2.22
Air content-adjusting agent: MA404 <antifoaming agent, product of Pozzolith Bussan Co, Ltd.>
MA303A <AE agent, product of Pozzolith Bussan Co, Ltd.>
The used materials in Table 10 show the following materials, respectively.
Cement (C) : Two kinds-mixed ordinary Portland cement; (a product of TAIHEIYO CEMENT CORP., / a product of UBE-MITSUBISHI CEMENT CORP.)=(80/20).
Coarse aggregate (G): Ome hard rubble, density of 2.65;
Blend of three classification: 5 to 10mm/10 to 15mm/15 to 20mm=30/30/40 (volume ratio (%) thereof). Fine aggregate of not more than 5mm and not less than 20mm was removed from the aggregate.
Fine aggregate (S1): land sand of Kakegawa, density of 2.59, FM value of 2.19
Fine aggregate (S2): mountain sand of Chiba, density of 2.61, FM value of 2.22
Air content-adjusting agent: MA404 <antifoaming agent, product of Pozzolith Bussan Co, Ltd.>
Air content-adjusting agent: MA303A <antifoaming agent, product of Pozzolith Bussan Co, Ltd.>

**[Table 7]**

| | Compound of concrete admixture | | | Mix ratio | Concrete test | | | | | |
|---|---|---|---|---|---|---|---|---|---|---|
| | Adduct(X) | Copolymer (B) | Sulfonic acid compound(C) | (X)/(B)/(C) % by weight> | Use amount <% by weight/C> | Slump value (cm) | | | Slump loss rate (%) | Maintaining capability |
| | | | | | | Beginning | 15 minutes later | 30 minutes later | | |
| Example 47 | P14-003-006-160 | Polymer(1) | - | 50/50/0 | 0.16 | 19.5 | 17.5 | 15.5 | 20.5 | Good |
| Example 48 | P14-003-006-160 | Polymer(2) | - | 50/50/0 | 0.14 | 20.5 | 17.0 | 15.0 | 26.8 | Good |
| Example 49 | P14-003-006-160 | Polymer(3) | - | 50/50/0 | 0.15 | 20.0 | 18.0 | 16.0 | 20.0 | Good |
| Example 50 | P14-003-006-160 | - | LSN | 30/0/70 | 0.16 | 20.0 | 17.0 | 15.0 | 25.0 | Good |
| Comparative Example 7 | - | Copolymer (1) | - | 0/100/0 | 0.10 | 20.0 | 16.5 | 12.0 | 40.0 | Poor |
| Comparative Example 8 | - | Copolymer (2) | - | 0/100/0 | 0.10 | 20.5 | 15.5 | 11.0 | 46.3 | Poor |
| Comparative Example 9 | - | Copolymer (3) | - | 0/100/0 | 0.10 | 20.0 | 16.0 | 13.0 | 35.0 | Poor |
| Comparative Example 10 | - | - | LSN | 0/0/100 | 0.32 | 20.0 | 14.5 | 11.0 | 45.0 | Poor |

The above Table 7 is mentioned below.

In Table 7, "admixture/cement (% by weight) means a ratio by weight (% by weight) of the cement admixture to cement. "LSN" represents sodium ligninsulfonate.

As shown in Table 7, the concretes prepared by using the cement admixtures containing both of the polyalkyleneimine alkylene oxide adduct (A) and the polymer (B) each show more excellent slump maintaining capability than that of the mortar prepared by using only the polymer (B) as the cement admixture, which is a comparative example. The concretes prepared by using the cement admixture containing the polyalkylene oxide adduct (A) and the sulfonic acid compound (C) instead of the polymer (B) show excellent slump maintaining capability than that of the concrete prepared by using only the polymer (C) as the cement admixture, which is a comparative example.

### Examples 51 to 55

Polyalkyleneimine alkylene oxide adducts shown in Table 8 were produced in the same manner as in Production Examples 1, 2, and 8, except that the average molar number of addition of the ethyleneimine, alkylene oxide or the like was changed as shown in Table 8. In the following Table 8, "EIn" represents an average molar number of addition of ethyleneimine; "en1" and "en2" each represent an average number of addition of ethylene oxide to polyethyleneimine active hydrogen; and "pn" represents an average number of addition of propylene oxide to polyethyleneimine active hydrogen. Polyethyleneimines having a molecular weight equivalent to that shown in EIn of Table 1 were used. In Table 8, "PO% by weight" represents a value "% by weight" of propylene oxide relative to 100% by weight of alkylene oxides.

### Production Example 56

### Production Example of intermediate (e)

Into a pressurized container equipped with a stirrer, a manometer, and a thermometer were charged commercially available D-sorbitol (code:SB) 193 g and sodium hydroxide 1.5 g. Under stirring, air inside the container was substituted with nitrogen enough, and then the temperature was raised to 150°C. Then, ethylene oxide 2807 g (the average molar number of addition to the SB active hydrogen: 10 mole) was slowly added into the mixture to allow the reaction to proceed. After the total amount of the ethylene oxide was added, the mixture was matured for 30 minutes at the same temperature. Thereby, a SB-ethylene oxide adduct 3000 g was obtained. This compound was defined as an intermediate (e).

### Production Example of intermediate (f)

Into a pressurized container equipped with a stirrer, a manometer, and a thermometer were charged the intermediate (e) 434 g and sodium hydroxide 0.78 g. Under stirring, air inside the container was substituted with nitrogen enough, and then the temperature was raised to 130°C. Then, propylene oxide 327 g (the average molar number of addition to the SB: 6 mole) was slowly added into the mixture to allow the reaction to proceed. After the total amount of the propylene oxide was added, the mixture was matured for 3 hours at the same temperature. Then, ethylene oxide 1239 g (the average molar number of addition to the SB: 30 mole) was slowly added into the mixture to allow the reaction to proceed. After the total amount of the ethylene oxide was added, the mixture was matured for 30 minutes at the same temperature. Thereby, a SB-alkylene oxide adduct 2000 g was obtained. This compound was defined as an intermediate (f) .

Further, into a pressurized container equipped with a stirrer, a manometer, and a thermometer were charged the intermediate (f) 575 g and sodium hydroxide 0.68 g. Under stirring, air inside the container was substituted with nitrogen enough, and then the temperature was raised to 150ºC. Then, ethylene oxide 1425 g (the average molar number of addition to the SB: 120 mole) was slowly added into the mixture to allow the reaction to proceed. After the total amount of the ethylene oxide was added, the mixture was matured for 30 minutes at the same temperature. Thereby, a SB-alkylene oxide adduct 2000 g was obtained. This compound was defined as an intermediate (e) . This compound was defined as <SB-10-006-150>.

### Production Examples 57 to 59

SB-alkylene oxide adducts shown in Table 9 were produced in the same manner as in Production Example 56, except that the average molar number of addition to the SB was changed as shown in Table 9.

### Production Example 60

### Production of polymer (4)

Into a reaction container equipped with a thermometer, a stirrer, a dropping device, a nitrogen inlet tube, and a cooling tube were charged 1035 g of a 80% aqueous solution of the "IPN-50" obtained in Production Example 44 andwater 300 g. Under stirring in nitrogen atmosphere, the temperature was heated to 58ºC. Then, a mixed solution 71.4 g of acrylic acid 26.4 g and distilled water 45 g was added dropwise for 5 hours; and a mixed solution 86 g of sodium persulfate 3.5 g and distilled water 82.5 g and a mixed solution 91 g of L-ascorbic acid 1.0 g and distilled water 90 g were each added dropwise for 5.5 hours. Then, the mixture was stirred for 1 hour while maintained at 58°C, and the polymerization reaction was completed. After cooling, the mixture was adjusted to pH 7 by adding an aqueous solution of sodium hydroxide thereinto. Thereby, an aqueous solution of a polymer (4) containing 96% by weight of the IPN-50 was obtained. Table 3 shows the formulation and the weight average molecular weight of the polymer (4).

### Production Example 61

### "Production of MLA-100"

Into a pressurized container equipped with a stirrer, a manometer, and a thermometer were charged methallyl alcohol 710 g and sodium hydroxide 2.5 g. Under stirring, air inside the container was substituted with nitrogen enough, and then the temperature was raised to 125ºC. Then, ethylene oxide 868 g (the average molar number of addition: 2 mole) was slowly added into the mixture to allow the reaction to proceed. After the total amount of the ethylene oxide was added, the temperature was raised to 150ºC. Further, ethylene oxide 3470 g (the average molar number of addition: 8mole) was slowly added into the mixture to allow the reaction to proceed. After the total amount of the ethylene oxide was added, the mixture was matured for 60 minutes at the same temperature. Thereby, a methallyl alcohol ethylene oxide compound 2.5 kg was obtained. This compound was defined as "MLA-10".

### Production Example 62

### "Production of MLA-50"

Into a pressurized container equipped with a stirrer, a manometer, and a thermometer were charged the "MLA-10" 2217 g and sodium hydroxide 3.81 g. Under stirring, air inside the container was substituted with nitrogen enough, and then the temperature was raised to 150°C. Then, ethylene oxide 7621 g (the average molar number of addition: 40 mole) was slowly added into the mixture to allow the reaction to proceed. After the total amount of the ethylene oxide was added, the mixture was matured for 60 minutes at the same temperature. Thereby, a methallyl alcohol ethylene oxide compound 9.8 kg was obtained. This compound was defined as "MLA-50".

### Production Example 63

### "Production of MLA-100"

Into a pressurized container equipped with a stirrer, a manometer, and a thermometer was charged the "MLA-50" 5050 g and sodium hydroxide 2.46 g. Under stirring, air inside the container was substituted with nitrogen enough, and then the temperature was raised to 150ºC . Then, ethylene oxide 4890 g (the average molar number of addition: 50 mole) was slowly added into the mixture to allow the reaction to proceed. After the total amount of the ethylene oxide was added, the mixture was matured for 60 minutes at the same temperature. Thereby, a methallyl alcohol alkylene oxide compound 9.9 kg was obtained. This compound was defined as "MLA-100".

### Production Example 64

### "Production of polymer (5)"

Into a reaction container equipped with a thermometer, a stirrer, a dropping device, a nitrogen inlet tube, and a cooling tube were charged 1255g of a 80% aqueous solution of the "MLA-100" obtained in Production Example 63 andwater 245 g. Under stirring, air inside the container was substituted with nitrogen enough, and then the temperature was raised to 58°C. Then, a mixed solution 300 g of acrylic acid 85.4 g and distilled water 214.6 g was added dropwise for 5 hours; and a mixed solution 100 g of sodium persulfate 6.7 g and distilled water 93.3 g and a mixed solution 100 g of L-ascorbic acid 1.9 g, 3-mercaptopropionic acid 2.2 g, and distilled water 95.9 g were each added dropwise for 5.5 hours. Then, the mixture was stirred for 1 hour while maintained at 58ºC, and the polymerization reaction was completed. After cooling, the mixture was adjusted to pH 7 by adding an aqueous solution of sodium hydroxide thereinto. Thereby, an aqueous solution of a polymer (5) containing 90% by weight of the MLA-100 was obtained. Table 3 shows the formulation and the weight average molecular weight of the polymer (5).

### Production Example 65

### "Production of polymer (6)"

Into a reaction container equipped with a thermometer, a stirrer, a dropping device, a nitrogen inlet tube, and a cooling tube were charged 1860g of a 80% aqueous solution of the "IPN-50" obtained in Production Example 44 andwater 505 g. Under stirring, air inside the container was substituted with nitrogen enough, and then the temperature was raised to 60°C. Then, fused maleic anhydride 130 g was added in one portion and the temperature was raised to 63ºC. Then, a mixed solution 200 g of L-ascorbic acid 1.7 g and distilled water 198.3 g was added dropwise over 1 hour . Then, the mixture was stirred for 1 hour while maintained at 63ºC, and the polymerization reaction was completed. After cooling, the mixture was adjusted to pH 7 by adding an aqueous solution of sodium hydroxide thereinto. Thereby, an aqueous solution of a polymer (6) containing 96% by weight of the IPN-50 was obtained. Table 3 shows the formulation and the weight average molecular weight of the polymer (6).

### Examples 51 to 78, Comparative Examples 11 and 20, and Reference

### Example 1 (Concrete test method)

Using cement admixtures prepared by mixing the components shown in Table 8 to 10, in combinations and at mixing amounts shown in Table 11, concrete tests were performed under mixing conditions shown in Table 10.

That is, the cement (C), the fine aggregate (S), and the coarse aggregate (G) were charged into a 100L-forced pan type mixer and the mixture was dry-mixed for 10 seconds. Then, mixing water (W) containing the cement admixture and the air content-adjusting agent was added into the mixture and kneaded. Thereby, concrete was produced. The produced concrete was measured for slump values immediately after the kneading, 15 minutes later, and 30 minutes later according to JIS A 1101. Then, the slump loss capability was evaluated based on the slump loss rate to the slump value immediately after the kneading. The use amount of the cement admixture was adjusted such that the slump value immediately after the kneading showed 8 to 10 cm. The use amount of the air content-adjusting agent was adjusted such that the air content showed 3 to 5%. With respect to the slump maintaining capability, the concrete showing 15% or less of the slump loss rate 30 minutes later was represented by "Excellent"; the concrete showing more than 15% and 20% or less of the slump loss rate 30 minutes later was represented by "Good"; the concrete showing more than 20% and 25% or less of the slump loss rate 30 minutes later was represented by "Poor" ; and the concrete showing more than 20% and 25% or less of the slump loss rate 30 minutes later was represented by "Bad". Table 11 shows the evaluation results. The slump loss rate was calculated as mentioned above.

If there is a difference of about 5% in the slump loss rate, the viscosity in cement can be kept good. Therefore, an effect of considerably extending the time when the operation can be easily performed at the place where the cement is handled can be expected, and thereby the operation efficiency and the like can be improved. Such an effect can be evaluated to be remarkable in this industry.

The abbreviations used in the above Tables 1 to 7 are the same those used in the following Table 8 to 11. The names of the adduct (X) and the polymer (B) described in the following Table 11 correspond to those in Tables 1 to 10. For example, in Table 11, the name of the adduct (X) used in Example 69 was described as "SB-010-018-370". This means that the cement admixture was prepared using the adduct (X) synthesized in Production Example 57. The above statement is also applied to other Examples, Comparative Examples, and Reference Examples.

**[Table 8]**

| | Name of adduct (X) | Eln | en1 | pn1 | en2 | Total molar number | PO by weight % |
|---|---|---|---|---|---|---|---|
| Production Example 51 | P14-003-006-080 | 14 | 3 | 6 | 80 | 89 | 8.70 |
| Production Example 52 | P14-095 | 14 | 95 | 0 | 0 | 95 | 0.00 |
| Production Example 53 | P14-020 | 14 | 20 | 0 | 0 | 20 | 0.00 |
| Production Example 54 | P42-110 | 42 | 110 | 0 | 0 | 110 | 0.00 |
| Production Example 55 | P42-030 | 42 | 30 | 0 | 0 | 30 | 0.00 |
| Production Example 56 | SB-010-006-150 | - | 10 | 6 | 150 | 166 | 4.71 |
| Production Example 57 | SB-010-018-370 | - | 10 | 18 | 350 | 378 | 6.18 |
| Production Example 58 | SB-010-018-140 | - | 10 | 18 | 140 | 168 | 13.66 |
| Production Example 59 | SB-010-018-050 | - | 10 | 18 | 50 | 78 | 28.34 |
| Production Example 60 | SB-010-004-100 | - | 10 | 4 | 100 | 114 | 4.58 |
| Production Example 61 | SB-170 | - | 170 | 0 | 0 | 170 | 0.00 |
| Production Example 62 | SB-110 | - | 110 | 0 | 0 | 110 | 0.00 |
| Production Example 63 | SB-010 | - | 10 | 0 | 0 | 10 | 0.00 |

The above Table 8 is mentioned below. In the above Table 8, "EIn" represents an average molar number of addition of ethyleneimine. In the present invention, this number is defined as the number of active hydrogen. "SB" represents D-sorbitol. The number of active hydrogen of D-sorbitol is 6.

**[Table 9]**

| Polymer (B) | Formulation (ratio by weight) | Molecular weight |
|---|---|---|
| (4) | IPN-50/SA=96/4 | 64000 |
| (5) | MLA-100/SA=90/10 | 85000 |
| (6) | IPN-50/SMA=87.5/12.5 | 28000 |

The above Table 9 is mentioned below. In the above Table 9, "SMA" represents sodium maleic anhydride.

**[Table 10]**

| W/C (% by weight) | Fine aggregate ratio (% by volume) | Concrete formulation (g) | | | | | |
|---|---|---|---|---|---|---|---|
| | | Air | Water (W) | Cement(C) | Coarse aggregate (G) | Fine aggregate (S1) | Fine aggregate (S2) |
| 52.3 | 47.9 | 45 | 170 | 325 | 942 | 508 | 341 |

The above Table 10 is mentioned below. The meanings of the abbreviations in the above Table 10 are the same as in the above Table 6.

**[Table 11]**

| | Composition of concrete admixture | | | | Mix ratio | Concrete test | | | | | | | | |
|---|---|---|---|---|---|---|---|---|---|---|---|---|---|---|
| | Addut(X) | Copolymer(B) | | Sulfonic acid compound (C) | (X)/(B)/(C) <% by weight> | Admixture/Cement (wt%) | MA303 A (wt%/cement) | MA404 (wt%/cement) | Air amount (wt%) | Slump Value (cm) | | | Slump loss ratio (%) | Maintaining capability |
| | | | | | | | | | | Initial | 15 minutes later | 30minutes later | | |
| Example 51 | P14-003-006-160 | Polymer (1) | Polymer(4) | | 40/(50/10)/0 | 0.13 | | 0.0005 | 45 | 19.5 | 19.5 | 160 | 17.9 | Good |
| Example 52 | P14-003-006-100 | Polymer (1) | Polymer(4) | | 40/(50/10)/0 | 0.13 | | 0.0008 | 5.0 | 20.0 | 19.5 | 170 | 15.0 | Excellent |
| Example 53 | P14-003-006-100 | Polymer(1) | | LSN | 30/30/40 | 0.14 | 0.0025 | | 3.9 | 20.5 | 18.5 | 165 | 195 | Good |
| Example 54 | P14-003-006-100 | Polymer(1) | | | 50/50 | 0.125 | | 0.0015 | 4.1 | 19.0 | 18.0 | 155 | 18.4 | Good |
| Example 55 | P14-003-006-250 | Polymer(1) | Polymer(4) | | 20/(50/30)/0 | 0.13 | 0.0005 | | 4.8 | 19.0 | 18.0 | 160 | 15.8 | Good |
| Example 56 | P14-003-006-100 | Polymer (5) | Polymer(4) | | 30/(25/45)/0 | 0.12 | | 0.0005 | 4.5 | 20.5 | 19.5 | 175 | 14.6 | Excellent |
| Example 57 | P14-003-006-100 | Polymer (2) | Polymer(4) | | 30/(25/45)/0 | 0.125 | | 0.0006 | 4.7 | 20.0 | 19.0 | 170 | 15.0 | Excellent |
| Example 58 | P14-003-006-100 | Polymer (3) | Polymer(4) | | 30/(25/45)/0 | 0.135 | | 0.0005 | 5.2 | 19.6 | 18.5 | 170 | 12.8 | Excellent |
| Example 59 | P14-003-012-120 | Polymer (5) | Polymer(4) | | 30/(25/45)/0 | 0.135 | | 0.0035 | 4.0 | 20.0 | 18.0 | 165 | 175 | Good |
| Example 60 | P14-080-006-80 | Polymer (6) | Polymer (4) | | 40/(50/10)/0 | 0.135 | | 0.0015 | 4.4 | 20.5 | 19.5 | 17.0 | 1 7.1 | Good |
| Example 61 | P14-160-006-80 | Polymer (5) | Polymer (4) | | 40/(50/10)/0 | 0.14 | | 0.002 | 43 | 21.0 | 19.5 | 17.0 | 19.0 | Good |
| Example 62 | P14-110 | Polymer (1) | Polymer (4) | | 40/(50/10)/0 | 0.13 | | | 4.6 | 20.5 | 18.5 | 17.0 | 17.1 | Good |
| Example 63 | P14-260 | Polymer (1) | Polymer (4) | LSN | 20/(20/30)/30 | 0.145 | 0.002 | | 4.8 | 20.0 | 18.0 | 165 | 175 | Good |
| Example 64 | P14-260 | Polymer (1) | Polymer (4) | | 40/(50/10)/0 | 0.13 | | | 5.0 | 21.0 | 19.5 | 17.5 | 16.7 | Good |
| Example 65 | P42-003-006-110 | Polymer (1) | Polymer (4) | | 40/(50/10)/0 | 0.125 | | | 42 | 20.5 | 19.6 | 18.0 | 122 | Excellent |
| Example 66 | P42-110 | Polymer (1) | Polymer (4) | | 40/(50/10)/0 | 0.12 | 0.0025 | | 5.1 | 20.0 | 18.5 | 165 | 175 | Good |
| Example 67 | SB-010-006-150 | Polymer (1) | Polymer (4) | | 40/(50/10)/0 | 0.13 | | 0.0008 | 4.7 | 19.0 | 18.0 | 17.0 | 105 | Excellent |
| Example 68 | SB-010-006-150 | Polymer (1) | Polymer (4) | | 30/(25/45)/0 | 0.145 | | 0.0005 | 4.5 | 19.0 | 19.0 | 18.0 | 5.3 | Excellent |
| Example 69 | SB-010-006-150 | Polymer (2) | Polymer (4) | | 30/(25/45)/0 | 0.146 | | 0.0005 | 4.5 | 20.0 | 19.6 | 18.0 | 10.0 | Excellent |
| Example 70 | SB-010-006-150 | Polymer (3) | Polymer(4) | | 30/(25/45)/0 | 0.15 | | 0.0005 | 4.3 | 20.5 | 19.5 | 18.0 | 122 | Excellent |
| Example 71 | SB-010-018-370 | Polymer (1) | Polymer(4) | | 40/(50/10)/0 | 0.14 | | 0.0011 | 4.8 | 20.0 | 19.0 | 176 | 12.5 | Excellent |
| Example 72 | SB-010-004-100 | Polymer (1) | Polymer(4) | | 40/(50/10)/0 | 0.13 | | 0.0008 | 4.9 | 20.5 | 19.6 | 180 | 122 | Excellent |
| Example 73 | SB-010-004-100 | Polymer (1) | | LSN | 30.30/40 | 0.15 | 0.0025 | | 42 | 20.0 | 18.0 | 165 | 175 | Good |
| Example 74 | SB-010-004-100 | Polymer (1) | | | 50/50 | 0.125 | | 0.0015 | 4.7 | 19.5 | 17.5 | 165 | 15.4 | Good |
| Example 75 | SB-010-018-140 | Polymer (1) | Polymer(4) | | 40/(50/10)/0 | 0.145 | | 0.0045 | 4.1 | 20.5 | 19.5 | 180 | 122 | Excellent |
| Example 76 | SB-110 | Polymer (1) | Polymer(4) | | 40/(50/10)/0 | 0.15 | 0.001 | | 43 | 20.5 | 18.0 | 170 | 17.1 | Good |
| Example 77 | SB-110 | Polymer (1) | Polymer(4) | LSN | 20/(20/30)/30 | 0.14 | 0.0025 | | 4.7 | 20.0 | 18.5 | 170 | 15.0 | Excellent |
| Example 78 | SB-170 | Polymer (5) | Polymer(4) | | 40/(50/10)/0 | 0.145 | 0.0005 | | 42 | 20.0 | 18.0 | 165 | 175 | Good |
| Comparative Example 11 | P14-003-006-080 | Polymer(1) | Polymer(4) | | 40/(50/10)/0 | 0.136 | | 0.0015 | 5.1 | 20.0 | 18.5 | 155 | 225 | Poor |
| Comparative Example 12 | P1 4-003-006-080 | Polymer(1) | | L8N | 30.80/40 | 0.145 | 0.0015 | | 5.0 | 21.0 | 18.0 | 15.0 | 28.6 | Poor |
| Comparative Example 13 | P14-003-006-080 | Polymer(1) | | | 50/50 | 0.13 | | 0.0025 | 3.9 | 19.5 | 17.0 | 15.0 | 23.1 | Poor |
| Comparative Example 14 | P42-030 | Polymer(1) | Polymer(4) | | 40/(50/10)/0 | 0.135 | 0.0005 | | 4.6 | 19.5 | 16.0 | 140 | 282 | Poor |
| Comparative Example 15 | P14-095 | Polymer (6) | Polymer(4) | | 40/(50/10)/0 | 0.125 | | | 4.8 | 20.5 | 18.0 | 15.0 | 26.8 | Poor |
| Comparative Example 16 | P14-020 | Polymer(1) | Polymer(4) | | 40/(50/10)/0 | 0.140 | 0.001 | | 42 | 19.5 | 15.0 | 135 | 30.8 | Bad |
| Comparative Example 17 | SB-010-018-050 | Polymer(1) | Polymer(4) | | 40/(50/10)/0 | 0.13 | | 0.0075 | 43 | 20.5 | 18.5 | 16.0 | 22.0 | Poor |
| Comparative Example 18 | SB-010 | Polymer(1) | Polymer(4) | | 40/(50/10)/0 | 0.135 | 0.001 | | 4.7 | 20.5 | 17.0 | 14.0 | 31.7 | Bad |
| Comparative Example 19 | SB-010 | Polymer(1) | | LSN | 30/80/40 | 0.155 | 0.0035 | | 4.6 | 19.6 | 17.0 | 14.0 | 282 | Poor |
| Comparative Example 20 | SB-010 | Polymer(1) | | | 50/50 | 0.126 | 0.0015 | | 4.9 | 21.0 | 17.0 | 135 | 35.7 | Bad |
| Reference Example 1 | P42-110 | Polymer(6) | Polymer(4) | | 40/(50/10)/0 | 0.12 | | | 4.5 | 20.6 | 17.0 | 15.0 | 26.8 | Poor |

The above Table 11 is mentioned below. In the above Table 11, "LSN" represents sodium ligninsulfonate. "Admixture/cement (wt %) " means a ratio by weight of the cement admixture to cement and represents the use amount of the cement admixture. "MA303A" represents an AE agent. "MA404A" represents an antifoaming agent.

In the above Table 11, the slump maintaining capability was evaluated by 4 levels, such as excellent, good, poor, and bad, base on the slump loss rate, as mentioned above. Even if some cement admixtures are given for the same evaluation in the above-mentioned 4-level slump maintaining evaluation, it does not necessarily mean that there is no difference in slump maintaining capability among these cement admixtures for which the same evaluations were given. In the above-mentioned slump loss rate measurements performed under the same conditions, it has been experimentally found that about ±1% of measurement error is basically generated. Therefore, it is highly possible that a difference of 2% or more is not measurement error. Therefore, if there is a difference of 2% or more in the above-mentioned slump loss rate in the cement admixtures for which the same evaluations in the above-mentioned slump maintaining capability are given, it can be judged that the cement admixture having a smaller slump loss rate is more excellent. If there is a difference of 2% or more in the slump loss rate as mentioned above, the viscosity in cement can be kept good. Therefore, an effect of extending the time when the operation can be easily performed at the place where the cement is handled can be expected, and thereby the operation efficiency and the like canbe improved. Such an effect can be evaluated to be remarkable in this industry.

Comparison of the cement admixtures in Examples 52 to 54 and those in Comparative Examples 11 to 13 clearly shows the technical meaning derived from that the average molar number of addition of the oxyalkylene group relative to the active hydrogen 1 mole is 100 mole or more. Each of the cement admixtures in Comparative Examples 11 to 13 was a cement admixture containing the adduct in which an average 89 mole of oxyalkylene groups are added to polyalkyleneimine. Such cement admixtures are inferior to the cement admixtures in Examples 52 to 54 in slump maintaining capability. That is, if the average molar number of addition of the oxyalkylene group relative to the active hydrogen 1 mole is 100 or more, the slump maintaining capability of the cement admixture can be sufficiently improved. The same thing can be also applied to the polyalcohol alkylene oxide adducts through comparison of the cement admixtures in Examples 72 to 74 with the cement admixtures in Comparative Examples 18 to 20.

Further, comparison of the cement admixture in Example 66 with that in Reference Example 1 clearly shows the technical meaning derived from that the unsaturated monocarboxylic acid monomer is mainly used for synthesizing the polycarboxylic acid polymer (B), that is, the technical meaning derived from that the use amount of the polycarboxylic acid is reduced as much as possible. The cement admixture in Reference Example 1 was prepared in the same manner as in Example 66, except that the cement admixture contained, as the above-mentioned polycarboxylic acid polymer (B), the polymer (6) prepare using 12.5% by weight of maleic anhydride in 100% by weight of the total monomer components. However, the cement admixture in Reference Example 1 insufficiently exhibited the slump maintaining capability, if compared with the cement admixture in Example 66. Thus, it was found that the slump maintaining capability can be sufficiently improved by reducing the use amount of the polycarboxlic acid as much as possible.

Further, comparison of the cement admixture in Example 52 with that in Example 62, and comparison among the cement admixtures in Examples 67, 75, and 78 clearly show the technical meaning derived from that the oxyalkylene group containing 3 or more carbon atoms is essentially contained. The cement admixture in Example 52 was a cement admixture essentially containing the oxyalkylene group containing 3 or more carbon atoms and containing the adduct (X) in which the average molar number of addition of the oxyalkylene group was 109. The cement admixture in Comparative Example 62 was a cement admixture containing no oxyalkylene group containing 3 or more carbon atoms and containing the adduct (X) in which the average molar number of addition of the oxyalkylene group was 110. The cement admixtures in Examples 52 and 62 are the same in the use form of the polycarboxylic acid polymer (B), no use of the sulfonic acid compound (C), and the mixed ratio of each polymer, except that the structures in the above-mentioned adduct (X) were different. Therefore, comparison between such cement admixtures reveals the technical meaning derived from that the oxyalkylene group containing 3 or more carbon atoms is essentially contained. The cement admixture in Example 52 was further superior to the cement admixture in Example 62 in the slump maintaining capability. The same thing can be applied to comparison among the cement admixtures in Examples 67, 75, and 78. Thus, the slump maintaining capability can be improved if the oxyalkylene group containing 3 or more carbon atoms is essentially contained.

The present application claims priority under Article 4 of the Paris Convention to Japanese Patent Application No. 2005-299764 filed in Japan on October 14, 2005, entitled "CEMENT ADMIXTURE", the entire contents of which are herein incorporated by reference.

## Claims

1. A cement admixture comprising an alkylene oxide adduct comprising a compound having 3 or more active hydrogens and an oxyalkylene group added to the compound,
wherein an average molar number of addition of the oxyalkylene groups relative to 1 mole of the active hydrogen is 100 mole or more.

2. The cement admixture according to Claim 1, further comprising a polycarboxylic acid polymer.

3. The cement admixture according to Claim 2,
wherein the polycarboxylic acid polymer comprises:
a monomer unit derived from a polyalkylene glycol unsaturated monomer represented by the following formula (1): 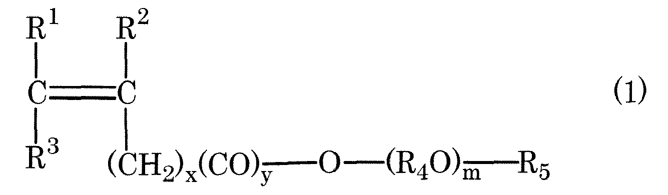
in the above formula (1),
R¹, R², and R³ being the same or different and each representing a hydrogen atom or a methyl group;
R⁴O representing one or two or more species of oxyalkylene groups containing 2 to 4 carbon atoms;
R⁵ representing a hydrogen atom or a hydrocarbon group containing 1 to 30 carbon atoms;
x representing 0 to 2;
y representing 0 to 1; and
m representing an average molar number of addition of the oxyalkylene group and being 2 to 300; and
a monomer unit derived from an unsaturated monocarboxylic acid monomer represented by the following formula (2): 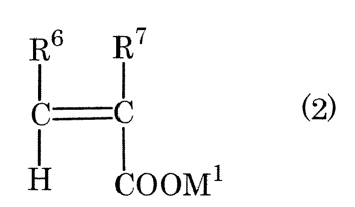
in the above formula (2),
R⁶ and R⁷ being the same or different and each representing a hydrogen atom or a methyl group;
M¹ representing a hydrogen atom, a metal atom, an ammonium group, or an organic amine group.

4. The cement admixture according to Claim 2 or 3,
wherein the unsaturated monocarboxylic acid monomer accounts for 50% or more by weight relative to 100% by weight of total carboxylic acid monomer components.

5. A cement admixture comprising:
an alkylene oxide adduct comprising a compound having 3 or more active hydrogens and an oxyalkylene group added to the compound; and
a sulfonic acid compound.

6. The cement admixture according to any of Claims 1 to 5,
wherein the compound having 3 or more active hydrogens comprises an active hydrogen-containing hydroxyl group and/or an active hydrogen-containing amino group.

7. The cement admixture according to any of Claims 1 to 6,
wherein the alkylene oxide adduct is obtained by adding an alkylene oxide to polyalcohol and/or polyethyleneimine.

8. The cement admixture according to any of Claims 1 to 7,
wherein the adduct comprises an oxyalkylene group containing 3 or more carbon atoms.

9. The cement admixture according to any of Claims 1 to 8,
wherein the alkylene oxide adduct comprises oxyalkylene groups derived from ethylene oxide and propylene oxide.
